(19) Europäisches Patentamt
European Patent Office
Office européen des brevets

(11) Publication number: 0 173 718 B1

(12) **EUROPEAN PATENT SPECIFICATION**

(45) Date of publication of patent specification: 05.04.89

(51) Int. Cl.[4]: C 08 L 67/02, C 08 L 71/02

(21) Application number: 85901257.7

(22) Date of filing: 22.02.85

(86) International application number: PCT/US85/00282

(87) International publication number: WO 85/03717 29.08.85 Gazette 85/19

# (54) FAST CRYSTALLIZING POLYESTER RESIN CONTAINING THREE-COMPONENT CRYSTALLIZATION SYSTEM.

(30) Priority: 24.02.84 US 582991

(43) Date of publication of application: 12.03.86 Bulletin 86/11

(45) Publication of the grant of the patent: 05.04.89 Bulletin 89/14

(84) Designated Contracting States: BE DE FR GB NL

(56) References cited:
EP-A-0 109 123
GB-A-2 015 013
US-A-3 663 653
US-A-4 163 100
US-A-4 207 230
US-A-4 212 791
US-A-4 322 335
US-A-4 351 757
JOURNAL OF POLYMER SCIENCE, VOLUME XIV, 1954, D. COLEMAN, "BLOCK COPOLYMERS: COPOLYMERIZATION OF ETHYLENE TEREPHTHALATE AND POLYOXYETHYLENE GLYCOLS", PAGES 15-28

(73) Proprietor: E.I. DU PONT DE NEMOURS AND COMPANY
1007 Market Street
Wilmington Delaware 19898 (US)

(72) Inventor: GARRISON, William, Emmett, Jr.
701 Cardiff Road
Wilmington, DE 19803 (US)

(74) Representative: Abitz, Walter, Dr.-Ing. et al
Abitz, Morf, Gritschneder, Freiherr von Wittgenstein Postfach 86 01 09
D-8000 München 86 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 173 718 B1

Courier Press, Leamington Spa, England.

**Description**

This invention relates to certain polyethylene terephthalate (PET) or polyethylene terephthalate/polybutylene terephthalate (PET/PBT) molding compositions characterized by a rapid rate of crystallization and the capacity to be molded into high quality molded articles at low molding temperatures. Polyethylene terephthalate is difficult to mold at molding temperatures below about 110°C because its crystallization rate is slow and uneven. Moreover, articles molded from polyethylene terephthalate tend to stick to the mold and are difficult to remove.

Polyethylene terephthalate molding compositions containing crystallization rate enhancers can be molded at lower temperatures, e.g. 80—100°C to give high quality articles that are easily removed from the molds and that have glossy surfaces, even when glass reinforced. Such enhancers include

(1) material derived from

(a) hydrocarbon acids containing between about 7 and 54 carbon atoms or organic polymers having at least one carboxyl group attached thereto, and

(b) sodium and/or potassium ion sources capable of reacting with the carboxyl in the acid or polymer of (a), and

(2) selected low molecular weight organic compounds including esters, ketones, sulfones, sulfoxides, nitriles and amides.

However, when the need exists for very fast crystallization rates or even lower mold temperatures, merely adding greater quantities of the above-mentioned crystallization enhancers is not satisfactory, because the incremental effect of such enhancers frequently diminishes with greater quantities of the same, and large quantities of such enhancers can have an adverse effect on the physical properties of molded articles made from compositions containing the same.

The need exists for compositions that have the capacity to be molded into high quality molded articles at low molding temperatures and at a rapid rate of crystallization, without any significant adverse effect on the physical properties of the articles.

US—A—3,663,653 discloses that polyethylene terephthalate molding compositions can be modified to have a higher crystallization speed by incorporating "soft segments" of polytetrahydrofuran (i.e. polytetramethylene ether glycol) into the PET polymer chain.

Coleman, Journal of Polymer Science, Volume XIV, pages 15—28 (1954) discloses that polyethylene terephthalate can be modified to lower its second order transition temperature (i.e. glass transition temperature) by incorporating "soft segments" of polyoxyethylene glycol into the PET polymer chain.

GB—A—2,015,013 discloses polyethylene terephthalate molding compositions containing crystallization rate enhancers, such as sodium or potassium salts of organic polymers containing pendant carboxyl groups and various low molecular weight organic esters.

US—A—4,322,335 discloses polyethylene terephthalate molding compositions which have been modified to increase the crystallization rate by incorporating "soft segments" of polyoxyalkylene glycols into the PET polymer chain. It also generally discloses that his compositions can include external plasticizers as well; however, neither Nield nor any of the other references cited and briefly discussed above exemplify compositions containing the three-component crystallization system of the present invention or that there exists a synergistic relationship between the "soft segment" incorporated into the PET polymer chain and the particular class of external plasticizers used in the compositions of the present invention.

Figures 1—11 show a schematic representation of the data from Examples 1—50 appearing in Table 2 below and graphically demonstrate the presence or absence of synergistic interaction between the polyalkylene oxide soft segment incorporated into the polymer chain of the matrix resin and a plasticizer. Each of the graphs in Figures 1—11 plots $T_{pk}$, which is a measure of the lowest mold surface temperature at which a particular composition can normally be molded to give a high quality fabricated article having acceptable surface properties, versus the weight percent of soft segment based on the total amount of soft segment plus plasticizer. Where the data gives a straight line, no synergism is shown, i.e. the effect of the soft segment and plasticizer on $T_{pk}$ is in direct linear proportion to relative amounts of the soft segment and plasticizer in the composition. Where the data gives a line that dips below a straight line connecting the two end points (0% soft segment/100% plasticizer and 100% soft segment/0% plasticizer) synergism is found, i.e. the effect on lowering the $T_{pk}$ of the mixture of soft segment and plasticizer is greater than the additive effect on equal quantities of the two ingredients used separately.

Fig. 1 represents the data of Examples 1—8

Fig. 2 represents the data of Examples 9—19

Fig. 3 represents the data of Examples 20—24

Fig. 4 represents the data of Examples 25—27

Fig. 5 represents the data of Examples 28—30

Fig. 6 represents the data of Examples 31—35

Fig. 7 represents the data of Examples 36—40

Fig. 8 represents the data of Examples 8, 41 and 42

Fig. 9 represents the data of Examples 8, 43 and 44

Fig. 10 represents the data of Examples 8, 45 and 46

Fig. 11 represents the data of Examples 48—50

This invention relates to certain polyethylene terephthalate and polyethylene terephthalate/polybutylene terephthalate molding compositions characterized by a rapid rate of crystallization and the capacity to be molded into high quality molded articles at low molding temperatures. It has been found that certain known external plasticizers act synergistically in combination with "soft segments" incorporated into the PET or PET/PBT polymer chain, i.e. the beneficial effect on the crystallization rate and on the molding temperature necessary to achieve high quality molded articles, which beneficial effect would be expected from both the plasticizer and the "soft segment", is more than additive. This permits one to use a lower overall quantity of plasticizer and soft segment, thus minimizing the adverse effect on physical properties of the molded articles that would result from the use of the larger quantity that would be necessary to achieve an equivalent improvement in crystallization rate and necessary molding temperature if either were used alone.

According to a preferred embodiment of the invention, it has been found that certain diesters of polyalkylene glycols and monocarboxylic acids and certain monoesters of methoxy capped polyethylene glycol act synergistically in increasing the crystallization rate and therefore lowering the minimum molding temperature necessary to produce high quality molded articles from PET and PET/PBT molding compositions when such esters are used in combination with polyalkylene oxide "soft segments" incorporated into the polymer chain of such polyethylene terephthalate or polyethylene terephthalate/polybutylene terephthalate mixtures or copolymers, where such molding compositions also contain at least one crystallization promoter which is a material derived from:

(a) hydrocarbon acids containing between about 7 and 54 carbon atoms or organic polymers having at least one carboxyl group attached thereto, and

(b) sodium and/or potassium ion sources capable of reacting with the carboxyl in the acid or polymer of (a).

The plasticizers which are used in the compositions of the present invention are compounds of the formula

$$A-O\left[\underset{X}{\underset{|}{CH}}-(CH_2)_m-O\right]_n-B$$

where

m is an integer from 1 to 3, inclusive,

n is an integer from 4 to 24 inclusive,

X is $CH_3$, $C_2H_5$ or H,

A is alkyl, acyl or aroyl of 1 to 10 carbon atoms, and

B is alkyl, acyl or aroyl of 1 to 10 carbon atoms.

Preferred plasticizers for use in the compositions of the present invention are those described above where

m is one, or where

n is 4 to 14, or where

X is H

and especially where m is one, n is 4 to 14, and X is H. More preferred plasticizers for use in the compositions of the present invention are those described above where

m is one, or where

n is 7 to 13, or where

X is H, or where

A is acyl of 8 carbon atoms or methyl, or where

B is acyl of 8 carbon atoms,

and especially where m is one, n is 7 to 13, X is H, A is acyl of 8 carbon atoms or methyl, and B is acyl of 8 carbon atoms. Polyethylene glycol 400 bis(2-ethylhexanoate), methoxy polyethylene glycol 550 2-ethylhexanoate and tetraethylene glycol bis(2-ethylhexanoate) are especially preferred. Polyethylene glycol 400 bis(2-ethylhexanoate) is most preferred.

The compositions of the present invention contain from 1 to 15 parts by weight of the plasticizer per hundred parts of the matrix resin, with 2 to 12 parts plasticizer preferred and 4 to 8 parts plasticizer most preferred.

As indicated above, the matrix resin will be polyethylene terephthalate or mixtures and/or copolymers of polyethylene terephthalate and polybutylene terephthalate having an inherent viscosity of at least 0.4 as measured by ASTM D—2857. Polyethylene terephthalate resins are preferred. The polyethylene terephthalate preferably has an upper limit on inherent viscosity of 1.2. Inherent viscosity is measured in a 3:1 by volume ratio of methylene chloride and trifluoroacetic acid at 30°C. The polyethylene terephthalate can contain minor amounts of comonomers such as diethylene glycol or glutaric acid. Alternatively, mixtures and/or copolymers of polyethylene terephthalate and polybutylene terephthalate copolymer can be used, i.e. the polyethylene terephthalate can contain up to 30% by weight of polybutylene terephthalate.

The polybutylene terephthalate can be incorporated into the polyethylene terephthalate by direct copolymerization of ethylene terephthalate units with butylene terephthalate units, by homopolymerization of ethylene terephthalate units followed by melt blending with up to 30% by weight of polybutylene terephthalate, or by homopolymerization of butylene terephthalate units followed by melt blending with at least 70% by weight of polyethylene terephthalate. In each of the latter two cases, some copolymerization is likely to occur by ester interchange. The compositions of the present invention will contain from 20—90% by weight of the matrix resin, preferably 30 to 80% and most preferably from 40 to 80%.

The compositions of the present invention also contain 1—15 parts by weight of polyalkylene oxide "soft segments" incorporated into the matrix resin polymer chain per hundred parts of the matrix resin, preferably 2 to 12 parts, and most preferably 4 to 8 parts. The polyalkylene oxide is preferably predominantly polyethylene oxide and preferably is introduced into the polymer chain as a copolymer of polyethylene glycol terephthalate (optionally containing a minor proportion of other polyalkylene units) and polyethylene terephthalate, or is introduced into the polymer chain by reaction in the melt of polyethylene glycol (optionally containing a minor proportion of other polyalkylene units) with polyethylene terephthalate. When the matrix resin is a mixture and/or copolymer of polyethylene terephthalate and polybutylene terephthalate, the polyalkylene oxide can be incorporated into the polymer chain by direct copolymerization of polyethylene terephthalate, polybutylene terephthalate and polyalkylene glycol, by let down of polybutylene terephthalate/polyalkylene oxide copolymer with polyethylene terephthalate, or by direct addition of polyalkylene oxide to polyethylene terephthalate/polybutylene terephthalate copolymer. The molecular weight of the polyalkylene oxide is in the range of 200 to 3250, preferably 600 to 1500. The total weight proportion of the soft segment plus the plasticizer in the compositions of the present invention will be from 9—20 parts by weight per hundred parts of the matrix resin, preferably 9—18 parts by weight and most preferably 12—18 parts by weight. Total amounts lower than 9 parts by weight per hundred parts of the matrix resin can be used but generally will not show the synergism seen with amounts equal to or greater than 9 parts. Similarly, amounts greater than 20 parts by weight per hundred parts of the matrix resin can be used, but will generally adversely affect physical properties and processing of the compositions. The relative quantities of soft segment and plasticizer in the compositions of the present invention can vary from 85:15 to 15:85, but preferably will be between 75:25 and 40:60, most preferably between 65:35 and 40:60.

In addition to the plasticizer, the matrix resin and the polyalkylene oxide "soft segments" incorporated therein, the compositions of the present invention include 1 to 16 parts by weight of a crystallization promoter per hundred parts of the matrix resin, preferably 2 to 9 parts, most preferably 3 to 6 parts. The crystallization promoter is derived from

(a) hydrocarbon acids containing between about 7 and 54 carbon atoms or organic polymers having at least one carboxyl group attached thereto, and

(b) sodium and/or potassium ion sources capable of reacting with the carboxyl groups of the acids or polymers of (a).

The crystallization promotor is such that it contains the sodium and/or potassium ion source in sufficient quantity such that the sodium and/or potassium concentration in matrix resin is greater than 0.01 weight percent. Preferably, the crystallization promoter is an organic ionic hydrocarbon copolymer of an α-olefin of 2—5 carbon atoms and an α,β-ethylenically unsaturated carboxylic acid of 3—5 carbon atoms in which the carboxyl groups have been at least partially neutralized with sodium or potassium cations. Other suitable crystallization promoters include materials derived from (a) polyethylene terephthalate and/or polybutylene terephthalate oligomer and (b) sodium and/or potassium ion sources capable of reacting with the carboxyl end groups on the oligomer(s) of (a). Further, it is preferred that the crystallization promoter be present in an amount sufficient to provide a $\Delta H_H/\Delta H_c$ ratio to the composition of less than 0.25. It has been found that the $\Delta H_H/\Delta H_c$ ratio is a convenient method of measuring the degree of crystallization. Procedures for measuring this ratio are described below in connection with the examples.

The compositions of the present invention can also contain reinforcing or filler material, such as glass, graphite or aramid fibers, glass beads, aluminum silicate, asbestos, mica, calcium carbonate and the like, and combinations of such materials. Glass fibers are preferred. The compositions of the present invention can optionally contain reinforcing or filling material, preferably 0—50% by weight, and most preferably 0—45%. Compositions containing ethylene/butyl acrylate/glycidyl methacrylate elastomeric toughener and 2—8% glass fibers have shown surprisingly good Gardner impact and are especially preferred for certain end uses. Other compositions containing 25—45% glass fibers have shown remarkably good over-all balance of properties and are especially preferred for certain end uses.

Additional ingredients can be incorporated into the compositions of the present invention such as epoxy compounds, elastomeric tougheners (such as the ethylene/butyl acrylate/glycidyl methacrylate tougheners disclosed in WO 85/3718 (= EP—A—174 343)), lubricants, pigments, flame retardants, antioxidants, mold-release agents, ultraviolet light and heat stabilizers, nucleating agents and polymers used for convenience of processing to prepare concentrates.

The compositions of the present invention can be prepared by blending the various ingredients together by any convenient means to obtain an intimate blend. Neither temperature nor pressure are critical. For example, the matrix resin can be mixed dry in any suitable blender or tumbler with the other

ingredients and the mixture melt extruded. The extrudate can be chopped. If desired, the reinforcing or filling agent can be omitted initially and added after the first melt extrusion, and the resulting mixture can then be melt extruded.

Accordingly, the compositions of the present invention comprise

A. 20—90% by weight based on the total of components A, B, C, D and E of a matrix resin having an inherent viscosity of at least 0.4, said matrix resin being selected from the group consisting of polyethylene terephthalate homopolymers, polyethylene terephthalate/polybutylene terephthalate mixtures, polyethylene terephthalate/polybutylene terephthalate copolymers and mixtures thereof, wherein said polyethylene terephthalate/polybutylene terephthalate copolymers and mixtures contain at least 70% by weight ethylene terephthalate units,

B. 1—15 parts by weight per hundred parts of matrix resin A of polyalkylene oxide soft segments incorporated into the polymer chain of the matrix resin A, said polyalkylene oxide soft segments having a molecular weight of 200—3250,

C. 1—15 parts by weight per hundred parts of matrix resin A of a plasticizer of the formula

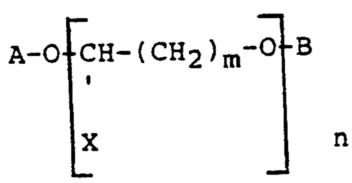

where

m is an integer from 1 to 3, inclusive,

n is an integer from 4 to 25, inclusive

A is alkyl, acyl or aroyl of 1 to 10 carbon atoms,

B is alkyl, acyl or aroyl of 1 to 10 carbon atoms, and

X is H, $CH_3$ or $C_2H_5$,

provided that the total quantity of (B) and (C) must be 9—20 parts by weight per hundred parts of matrix resin (A),

D. 1—16 parts by weight per hundred parts of the matrix resin A of a crystallization promoter derived from

(a) at least one source of carboxyl groups selected from the group consisting of hydrocarbon acids containing 7—54 carbon atoms and organic polymers having at least one carboxyl group attached thereto, and

(b) at least one source of metal ions capable of reacting with the carboxyl groups of (a) selected from the group consisting of sodium and potassium ion sources, where the concentration of said metal in said matrix resin (A) is at least 0.01 weight percent, and optionally

E. a material selected from the group consisting of reinforcing and filling materials.

In the following examples, there are shown specific embodiments of the present invention demonstrating the synergistic interaction of the polyalkylene oxide soft segment incorporated into the polymer chain of the matrix resin and the plasticizer as defined above. Additional control experiments demonstrate that such synergism is not found if the total quantity of soft segment and plasticizer is too small or if a plasticizer other than those defined as suitable for use in the compositions of the present invention is used. All parts and percentages are by weight, and all temperatures are in degrees Celsius unless otherwise specified. Measurements not originally in SI units have been so converted and rounded where appropriate.

In the following examples, tensile strength and elongation were measured on injection molded bars by ASTM Method D—638. The strain rate used was 0.508 cm/min (0.2 inches/minute) for reinforced and 0.508 cm/min (2.0 inches/minute) for unreinforced compositions. Notched Izod was measured by ASTM Method D—256, and unnotched impact strength was measured in a similar fashion on test bars annealed 16 hours at 150°C in nitrogen and not notched. Flexural modulus was measured according to ASTM Method D—790, and heat deflection temperature was measured according to ASTM Method D—648 at a fiber stress of 1819 KPa (264 p.s.i.).

Thermal parameters were measured on approximately 20 mg samples from the centers of 0.159 cm (1/16") bars using a Du Pont model 1090 thermal analyzer equipped with a 912 Differential Scanning Calorimeter with data plotted in the "time base" mode. $T_{pk}$ and $T_{freeze}$ are defined as the temperatures at the maximum of the crystallization exotherm obtained as the sample is respectively heated and later cooled at a rate of 10°C/minute. The W H ratio is the ratio of the integrated area under the $T_{pk}$ curve to that under the $T_{freeze}$ curve.

Each of the glass reinforced compositions in the following examples, except in Examples 20—23, was prepared by manually dry blending all of the ingredients and the resulting mixture was then extruded through a two-stage two-inch single screw extruder at a melt temperature of 285—300°C and a vacuum of 63.5—71.1 cm (25—28 inches) of mercury. In Examples 20—23, a portion of the plasticizer was precompounded into a 12% concentrate with polyethylene terephthalate in a 28 mm Werner and Pfleiderer twin screw extruder. This concentrate was then blended with the other ingredients as described above.

Each of the unreinforced compositions in the following examples was prepared by dry blending all the ingredients except the plasticizer, and then compounding the mixture in a 28 mm Werner and Pfleiderer twin screw extruder with the plasticizer being injected into the melt through the extruder barrel using a metering pump. The extruded strand was quenched in water and cut into pellets which were then dried at about 95°C in a dehumidified air oven for 16 hours. The dried pellets were injection molded into test bars using a 0.1701 kg (6 oz.) Van Dorn reciprocating screw machine with a fast ram speed. Mechanical properties were determined on test bars molded at a mold cavity temperature of about 105°C. $T_{pk}$ and other thermal properties were determined on test bars molded at a mold cavity temperature of about 50°C.

The ingredients used in each of the following examples are summarized as follows:

PET = polyethylene terephthalate homopolymer having an inherent viscosity of 0.6 as measured at 30°C at a concentration of 0.50 g/100 ml in a mixture of 1 part trifluoroacetic acid and 3 parts of dichloromethane for the reinforced compositions. For the unreinforced compositions PET with inherent viscosity of 0.72 was used.

PBT = polybutylene terephthalate homopolymer having an inherent viscosity of 0.8 (measured as described above for PET).

PEOT/PET = copolymer of polyethylene oxide terephthalate with polyethylene terephthalate which contains 19.6% polyethylene oxide 1450, the copolymer having an inherent viscosity of about 0.6 (measured as described above for PET) and containing 0.4% phenolic antioxidant.

Plasticizer A = polyethylene glycol 400 bis(2-ethylhexanoate).

Plasticizer B = tetraethylene glycol bis(2-ethylhexanoate).

Plasticizer C = methoxy polyethylene glycol 550 2-ethylhexanoate

Plasticizer D = neopentyl glycol dibenzoate.

Crystallization Promoter = copolymer of ethylene and 15% by weight methacrylic acid neutralized approximately 60% with sodium.

"Epon"*) 1009 = condensation product of epichlorohydrin and Bisphenol A having a molecular weight of 4000—8000 and approximately 0.53% oxixane oxygen.

Plasticizer D and Examples 1, 8, 9, 20, 24, 25, 27—31, 35, 36, 40—43, 45, 48 and 49 are comparative examples.

---

*) reg. trademark.

TABLE 1

COMPOSITION OF EXAMPLES 1 TO 50

| EXAMPLE NO. | % GLASS | % PET | % PBT | % PEOT/ PET COPOL | % CRYST. PROM. | % PLAST. | PLAST. TYPE | %* OTHER |
|---|---|---|---|---|---|---|---|---|
| 1 | 30 | 57.5 | 0.0 | 0.0 | 3.8 | 7.9 | A | 0.8 |
| 2 | 30 | 53.5 | 0.0 | 5.0 | 3.8 | 6.9 | A | 0.8 |
| 3 | 30 | 49.5 | 0.0 | 10.0 | 3.8 | 5.9 | A | 0.8 |
| 4 | 30 | 42.7 | 0.0 | 18.8 | 3.8 | 3.9 | A | 0.8 |
| 5 | 30 | 41.5 | 0.0 | 20.0 | 3.8 | 3.9 | A | 0.8 |
| 6 | 30 | 33.3 | 0.0 | 30.1 | 3.8 | 2.0 | A | 0.8 |
| 7 | 30 | 29.1 | 0.0 | 35.3 | 3.8 | 1.0 | A | 0.8 |
| 8 | 30 | 25.2 | 0.0 | 40.2 | 3.8 | 0.0 | - | 0.8 |
| 9 | 30 | 55.6 | 0.0 | 0.0 | 3.8 | 9.8 | A | 0.8 |
| 10 | 30 | 47.4 | 0.0 | 10.2 | 3.8 | 7.8 | A | 0.8 |
| 11 | 30 | 35.5 | 0.0 | 25.0 | 3.8 | 4.9 | A | 0.8 |
| 12 | 30 | 35.5 | 0.0 | 25.0 | 3.8 | 4.9 | A | 0.8 |
| 13 | 30 | 31.1 | 0.0 | 30.3 | 3.8 | 4.0 | A | 0.8 |
| 14 | 30 | 27.1 | 0.0 | 35.3 | 3.8 | 3.0 | A | 0.8 |
| 15 | 30 | 25.5 | 0.0 | 37.5 | 3.8 | 2.4 | A | 0.8 |
| 16 | 30 | 23.4 | 0.0 | 40.0 | 3.8 | 2.0 | A | 0.8 |
| 17 | 30 | 21.4 | 0.0 | 42.5 | 3.8 | 1.5 | A | 0.8 |
| 18 | 30 | 19.0 | 0.0 | 45.4 | 3.8 | 1.0 | A | 0.8 |
| 19 | 30 | 15.4 | 0.0 | 50.0 | 3.8 | 0.0 | - | 0.8 |
| 20 | 30 | 53.6 | 0.0 | 0.0 | 3.8 | 11.8 | A | 0.8 |
| 21 | 30 | 41.2 | 0.0 | 15.0 | 3.8 | 9.2 | A | 0.8 |
| 22 | 30 | 29.5 | 0.0 | 30.0 | 3.8 | 5.9 | A | 0.8 |
| 23 | 30 | 17.5 | 0.0 | 45.0 | 3.8 | 2.9 | A | 0.8 |
| 24 | 30 | 5.4 | 0.0 | 60.0 | 3.8 | 0.0 | - | 0.8 |
| 25 | 30 | 59.5 | 0.0 | 0.0 | 3.8 | 5.9 | A | 0.8 |
| 26 | 30 | 47.5 | 0.0 | 15.0 | 3.8 | 2.9 | A | 0.8 |
| 27 | 30 | 35.4 | 0.0 | 30.0 | 3.8 | 0.0 | - | 0.8 |
| 28 | 30 | 61.5 | 0.0 | 0.0 | 3.8 | 3.9 | A | 0.8 |
| 29 | 30 | 53.4 | 0.0 | 10.0 | 3.8 | 2.0 | A | 0.8 |
| 30 | 30 | 45.4 | 0.0 | 20.0 | 3.8 | 0.0 | - | 0.8 |
| 31 | 15 | 69.9 | 0.0 | 0.0 | 4.7 | 9.6 | A | 0.8 |
| 32 | 15 | 60.1 | 0.0 | 12.2 | 4.7 | 7.2 | A | 0.8 |
| 33 | 15 | 50.2 | 0.0 | 24.5 | 4.7 | 4.8 | A | 0.8 |
| 34 | 15 | 40.4 | 0.0 | 36.7 | 4.7 | 2.4 | A | 0.8 |
| 35 | 15 | 30.5 | 0.0 | 49.0 | 4.7 | 0.0 | - | 0.8 |
| 36 | 0 | 80.0 | 0.0 | 0.0 | 5.1 | 14.1 | A | 0.8 |
| 37 | 0 | 68.4 | 0.0 | 14.4 | 5.1 | 11.3 | A | 0.8 |
| 38 | 0 | 51.1 | 0.0 | 36.0 | 5.1 | 7.0 | A | 0.8 |
| 39 | 0 | 33.8 | 0.0 | 57.5 | 5.1 | 2.8 | A | 0.8 |
| 40 | 0 | 22.2 | 0.0 | 71.9 | 5.1 | 0.0 | - | 0.8 |
| 41 | 30 | 57.5 | 0.0 | 0.0 | 3.8 | 7.9 | D | 0.8 |
| 42 | 30 | 41.5 | 0.0 | 20.0 | 3.8 | 3.9 | D | 0.8 |

TABLE 1 - Cont'd.

COMPOSITION OF EXAMPLES 1 TO 50

| EXAMPLE NO. | % GLASS | % PET | % PBT | % PEOT/ PET COPOL | % CRYST. PROM. | % PLAST. | PLAST. TYPE | %* OTHER |
|---|---|---|---|---|---|---|---|---|
| 43 | 30 | 57.5 | 0.0 | 0.0 | 3.8 | 7.9 | B | 0.8 |
| 44 | 30 | 41.5 | 0.0 | 20.0 | 3.8 | 3.9 | B | 0.8 |
| 45 | 30 | 57.5 | 0.0 | 0.0 | 3.8 | 7.9 | C | 0.8 |
| 46 | 30 | 41.5 | 0.0 | 20.0 | 3.8 | 3.9 | C | 0.8 |
| 47 | 30 | 42.1 | 0.0 | 20.0 | 3.8 | 3.9 | A | 0.2 |
| 48 | 30 | 40.2 | 17.0 | 0.0 | 3.8 | 7.9 | A | 0.8 |
| 49 | 30 | 8.1 | 17.0 | 40.0 | 3.8 | 0.0 | - | 0.8 |
| 50 | 30 | 24.2 | 17.0 | 20.0 | 3.8 | 3.9 | A | 0.8 |

*Example 47 contains 0.2% "Irganox"+) 1010. All others contain 0.6% "Epon" 1009 + 0.2% "Irganox" 1010.

+) reg. trademark

TABLE 2

$T_{pk}$ AS A FUNCTION OF COMPOSITION

| EXAMPLE NO. | % GLASS | PLAST. TYPE | 100(PLAST. + PEO) / PLAST. + PEO + PET | 100(PEO) / PLAST. + PEO | $T_{pk}$ (DEG. C) |
|---|---|---|---|---|---|
| 1 | 30 | A | 12 | 0.0 | 90.5 |
| 2 | 30 | A | 12 | 12.5 | 89.2 |
| 3 | 30 | A | 12 | 25.0 | 85.8 |
| 4 | 30 | A | 12 | 48.5 | 83.3 |
| 5 | 30 | A | 12 | 50.0 | 84.7 |
| 6 | 30 | A | 12 | 75.0 | 87.8 |
| 7 | 30 | A | 12 | 87.5 | 88.4 |
| 8 | 30 | - | 12 | 100.0 | 90.8 |
| 9 | 30 | A | 15 | 0.0 | 91.0 |
| 10 | 30 | A | 15 | 20.0 | 89.3 |
| 11 | 30 | A | 15 | 50.0 | 78.0 |
| 12 | 30 | A | 15 | 50.0 | 78.1 |
| 13 | 30 | A | 15 | 60.0 | 78.6 |
| 14 | 30 | A | 15 | 70.0 | 79.0 |
| 15 | 30 | A | 15 | 75.0 | 79.9 |
| 16 | 30 | A | 15 | 80.0 | 80.0 |
| 17 | 30 | A | 15 | 85.0 | 81.6 |
| 18 | 30 | A | 15 | 90.0 | 82.4 |
| 19 | 30 | - | 15 | 100.0 | 84.5 |
| 20 | 30 | A | 18 | 0.0 | 89.7 |
| 21 | 30 | A | 18 | 25.0 | 77.3 |
| 22 | 30 | A | 18 | 50.0 | 69.8 |
| 23 | 30 | A | 18 | 75.0 | 70.8 |
| 24 | 30 | - | 18 | 100.0 | 77.9 |
| 25 | 30 | A | 9 | 0.0 | 93.7 |
| 26 | 30 | A | 9 | 50.0 | 93.5 |
| 27 | 30 | - | 9 | 100.0 | 95.8 |
| 28 | 30 | A | 6 | 0.0 | 98.4 |
| 29 | 30 | A | 6 | 50.0 | 100.2 |
| 30 | 30 | - | 6 | 100.0 | 102.2 |
| 31 | 15 | A | 12 | 0.0 | 98.4 |
| 32 | 15 | A | 12 | 25.0 | 94.6 |
| 33 | 15 | A | 12 | 50.0 | 87.8 |
| 34 | 15 | A | 12 | 75.0 | 87.9 |
| 35 | 15 | - | 12 | 100.0 | 90.6 |
| 36 | 0 | A | 15 | 0.0 | 94.7 |
| 37 | 0 | A | 15 | 20.0 | 85.4 |
| 38 | 0 | A | 15 | 50.0 | 80.1 |
| 39 | 0 | A | 15 | 80.0 | 83.1 |
| 40 | 0 | - | 15 | 100.0 | 84.0 |
| 41 | 30 | D | 12 | 0.0 | 90.4 |
| 42 | 30 | D | 12 | 50.0 | 90.4 |

TABLE 2 - Cont'd

$T_{pk}$ AS A FUNCTION OF COMPOSITION

| EXAMPLE NO. | % GLASS | PLAST. TYPE | 100(PLAST. + PEO) / PLAST. + PEO + PET | 100(PEO) / PLAST. + PEO | $T_{pk}$ (DEG. C) |
|---|---|---|---|---|---|
| 43 | 30 | B | 12 | 0.0 | 93.6 |
| 44 | 30 | B | 12 | 50.0 | 84.7 |
| 45 | 30 | C | 12 | 0.0 | 84.4 |
| 46 | 30 | C | 12 | 50.0 | 78.1 |
| 47 | 30 | A | 12 | 50.0 | 85.6 |
| 48* | 30 | A | 12 | 0.0 | 72.5 |
| 49* | 30 | - | 12 | 100.0 | 75.2 |
| 50* | 30 | A | 12 | 50.0 | 56.5 |

*Contains PET/PBT mixture and/or copolymer.

TABLE 3

ADDITIONAL PROPERTIES OF EXAMPLES 1 TO 50

| EXAMPLE NO. | T FREEZE | H RATIO | UNNOTCHED IMPACT (J/m) | NOTCHED IZOD (J/m) | TENS. STR., (MPa) | ELONG. % | FLEXURAL MODULUS (MPa) |
|---|---|---|---|---|---|---|---|
| 1 | 218 | 0.00 | 587 | 123 | 124 | 2.23 | 8233 |
| 2 | 217 | 0.01 | 785 | 128 | 137 | 2.52 | 7833 |
| 3 | 217 | 0.02 | 870 | 139 | 132 | 2.25 | 7522 |
| 4 | 217 | 0.03 | 1105 | 139 | 130 | 2.97 | 6998 |
| 5 | 216 | 0.02 | 1052 | 144 | 136 | 3.18 | 7474 |
| 6 | 214 | 0.02 | 1185 | 144 | 130 | 3.98 | 7012 |
| 7 | 213 | 0.02 | 1228 | 149 | 132 | 3.99 | 6923 |
| 8 | 213 | 0.04 | 1228 | 144 | 132 | 3.97 | 7040 |
| 9 | 218 | 0.00 | 689 | 133 | 137 | 2.32 | 7978 |
| 10 | 217 | 0.02 | 838 | 139 | 130 | 2.62 | 7798 |
| 11 | 216 | 0.02 | 1121 | 149 | 123 | 3.40 | 6792 |
| 12 | 216 | 0.00 | 1078 | - | 120 | 3.20 | 6654 |
| 13 | 215 | 0.03 | 1169 | - | 123 | 3.75 | 6481 |
| 14 | 214 | 0.03 | 1228 | - | 120 | 3.93 | 6350 |
| 15 | 213 | 0.03 | 1308 | - | 117 | 4.00 | 6095 |
| 16 | 214 | 0.02 | 1254 | - | 115 | 4.17 | 6095 |
| 17 | 212 | 0.03 | 1281 | - | 113 | 4.13 | 5943 |
| 18 | 213 | 0.03 | 1313 | - | 119 | 4.48 | 6047 |
| 19 | 212 | 0.02 | 1286 | 155 | 117 | 4.68 | 6268 |
| 20 | 218 | 0.01 | 432 | 112 | 95 | 1.97 | 7453 |
| 21 | 216 | 0.03 | 646 | 133 | 101 | 2.12 | 6150 |
| 22 | 215 | 0.01 | 1089 | 160 | 110 | 3.10 | 6102 |
| 23 | 213 | 0.04 | 1249 | 171 | 106 | 4.28 | 5599 |
| 24 | 211 | 0.02 | 1356 | 171 | 103 | 4.98 | 5240 |
| 25 | 216 | 0.02 | 496 | - | 134 | 2.10 | 6929 |
| 26 | 215 | 0.04 | 988 | - | 143 | 3.10 | 8212 |
| 27 | 214 | 0.09 | 875 | - | 146 | 3.28 | 8274 |
| 28 | 216 | 0.07 | 902 | 117 | 146 | 2.60 | 8522 |
| 29 | 216 | 0.09 | 881 | - | 154 | 2.93 | 9005 |
| 30 | 214 | 0.12 | 961 | - | 163 | 3.17 | 9494 |
| 31 | 218 | 0.05 | 358 | 85 | 117 | 3.10 | 5433 |
| 32 | 217 | 0.02 | 358 | 80 | 113 | 3.33 | 4730 |
| 33 | 216 | 0.02 | 395 | 85 | 100 | 3.77 | 4027 |
| 34 | 215 | 0.02 | 448 | 85 | 96 | 4.03 | 3916 |
| 35 | 213 | 0.02 | 470 | 75 | 96 | 4.47 | 3896 |
| 36 | 217 | 0.00 | NO BREAK | 64 | 39 | 280 | 1703 |
| 37 | 216 | 0.00 | NO BREAK | 64 | 38 | 320 | 1345 |
| 38 | 215 | 0.02 | NO BREAK | 80 | 41 | 310 | 862 |
| 39 | 214 | 0.03 | NO BREAK | 80 | 39 | 330 | 731 |
| 40 | 212 | 0.01 | NO BREAK | 101 | 38 | 330 | 738 |
| 41 | 211 | 0.03 | 875 | - | 124 | 2.93 | 8998 |
| 42 | 213 | 0.02 | 1020 | 139 | 137 | 3.65 | 7516 |

TABLE 3 - Cont'd.

ADDITIONAL PROPERTIES OF EXAMPLES 1 TO 50

| TENS. EXAMPLE NO. (MPa) | T FREEZE | FLEXURAL H RATIO | IMPACT (J/m) | UNNOTCHED IZOD (J/m) | NOTCHED STR., (MPa) | ELONG. % | MODULUS |
|---|---|---|---|---|---|---|---|
| 43 | 217 | 0.04 | 854 | - | 132 | 2.40 | - |
| 44 | 215 | 0.02 | 956 | - | 130 | 3.30 | - |
| 45 | 218 | 0.02 | 651 | 144 | 132 | 2.70 | 7543 |
| 46 | 217 | 0.02 | 1094 | 149 | 132 | 3.02 | 6757 |
| 47 | 216 | 0.02 | 1009 | 133 | 137 | 2.82 | 7267 |
| 48 | 198 | 0.08 | 1105 | - | 130 | 2.75 | 6743 |
| 49 | 187 | 0.42 | 1297 | - | 123 | 4.33 | 5902 |
| 50 | 198 | 0.01 | 1158 | - | 120 | 3.42 | 5537 |

### Examples 1—8

The data in Table 2 and the graph in Figure 1 demonstrate that with a total of 12% of polyethylene oxide soft segment plus polyethylene glycol 400 bis(2-ethylhexanoate) plasticizer (based on the total quantity of soft segment, plasticizer and matrix resin) in a 30% glass-reinforced composition, $T_{pk}$ is reduced to less than 85°C, while an equivalent amount of either the soft segment or the plasticizer used alone gives compositions where the $T_{pk}$ is greater than 90°C. It can also be seen from Table 3 that increasing the proportion of soft segment also increases the elongation and impact values of the composition. It can be seen from Example 20, that even with 18% of polyethylene glycol 400 bis(2-ethylhexanoate) plasticizer (and no soft segment) the $T_{pk}$ is lowered to only slightly under 90°C; and from Examples 19 and 24, that while 15% and 18% of soft segment (with no plasticizer) do lower the $T_{pk}$ to less than 85°C there is a substantial deterioration in physical properties (tensile strength and modulus).

### Examples 9—19

The data in Table 2 and the graph in Figure 2 demonstrate that with a total of 15% (as compared with 12% in Examples 1—8) of polyethylene oxide soft segment plus polyethylene glycol 400 bis(2-ethylhexanoate) plasticizer (based on the total quantity of soft segment, plasticizer and matrix resin), in a 30% glass-reinforced composition, $T_{pk}$ is reduced to as low as 78°C, while an equivalent amount of either the soft segment or the plasticizer used alone gives compositions where the $T_{pk}$ is greater than 84°C and 90°C, respectively.

### Examples 20—24

The data in Table 2 and the graph in Figure 3 demonstrate that with a total of 18% (as compared with 12% in Examples 1—8) of polyethylene oxide soft segment plus polyethylene glycol 400 bis(2-ethylhexanoate) plasticizer (based on the total quantity of soft segment, plasticizer and matrix resin), in a 30% glass-reinforced composition, $T_{pk}$ is reduced to as low as 70°C, while an equivalent amount of either the soft segment or the plasticizer used alone gives compositions where the $T_{pk}$ is approximately 78°C and 90°C, respectively.

### Examples 25—27

The data in Table 2 and the graph in Figure 4 demonstrate that with a total of 9% (as compared with 12% in Examples 1—8) of polyethylene oxide soft segment plus polyethylene glycol 400 bis(2-ethylhexanoate) plasticizer (based on the total quantity of soft segment, plasticizer and matrix resin), in a 30% glass-reinforced composition, there is only a slight, but significant, synergistic relationship with respect to $T_{pk}$, i.e., the point at 50/50 PEO/plasticizer is only slightly below the straight line that would connect the two points at 0/100 and 100/0.

### Examples 28—30

The data in Table 2 and the graph in Figure 5 demonstrate that with a total of 6% (as compared with 12% in Examples 1—8) of polyethylene oxide soft segment plus polyethylene glycol 400 bis(2-ethylhexanoate) plasticizer (based on the total quantity of soft segment, plasticizer and matrix resin), in a 30% glass-reinforced composition, there is no significant observable synergistic relationship with respect to $T_{pk}$,

i.e., when these two ingredients are used in combination at a total concentration of 6%, their effect is as would be expected from their effect individually at a comparable level. Their effect on lowering $T_{pk}$ is merely additive.

Examples 31—35

The data in Table 2 and the graph in Figure 6 demonstrate that with a total of 12% of polyethylene oxide soft segment plus polyethylene glycol 400 bis(2-ethylhexanoate) plasticizer (based on the total quantity of soft segment, plasticizer and matrix resin), in a 15% (as compared with 30% in Examples 1—8) glass-reinforced composition, $T_{pk}$ is reduced to a point substantially below that which would be found in compositions containing an equivalent amount of either the soft segment or the plasticizer used alone. It can also be seen that the absolute values of $T_{pk}$ are somewhat higher in compositions containing 15% glass as compared with compositions containing 30% glass, and that this effect is more pronounced as the proportion of plasticizer is increased.

Examples 36—40

The data in Table 2 and the graph in Figure 7 demonstrate that with a total of 15% (the same as in Examples 9—19) of polyethylene oxide soft segment plus polyethylene glycol 400 bis(2-ethylhexanoate) plasticizer, (based on the total quantity of soft segment, plasticizer and matrix resin), in a composition containing no filler or reinforcing material (as compared with 30% glass-reinforced compositions in Examples 9—19), $T_{pk}$ is reduced to a point substantially below that which would be found in compositions containing an equivalent amount of either the soft segment or the plasticizer used alone. It can also be seen that the absolute values of $T_{pk}$ are generally somewhat higher in compositions containing no filler or reinforcing material as compared with compositions containing 30% glass, and that this effect is more pronounced as the proportion of plasticizer is increased.

Examples 41—42

The data in Table 2 and the graph in Figure 8 demonstrate that with a total of 12% of polyethylene oxide soft segment plus neopentyl glycol dibenzoate plasticizer (based on the total quantity of soft segment, plasticizer and matrix resin) (rather than polyethylene glycol 400 bis(2-ethylhexanoate) plasticizer as used in Examples 1—8), in a 30% glass-reinforced composition, there is no significant observable synergistic relationship with respect to $T_{pk}$, when these two ingredients are used in combination. Even at a total concentration of 12% (as was used in Examples 1—8), their effect is as would be expected from their effect individually at a comparable level..Their effect on lowering $T_{pk}$ is merely additive.

Examples 43—44

The data in Table 2 and the graph in Figure 9 demonstrate that with a total of 12% of polyethylene oxide soft segment plus tetraethylene glycol bis(2-ethylhexanoate) plasticizer (based on the total quantity of soft segment, plasticizer and matrix resin) (rather than polyethylene glycol 400 bis(2-ethylhexanoate) plasticizer as used in Examples 1—8), in a 30% glass-reinforced composition, $T_{pk}$ is reduced to a point substantially below that which would be found in compositions containing an equivalent amount of either the soft segment or the plasticizer used alone. It can also be seen that the absolute values of $T_{pk}$ are quite comparable with tetraethylene glycol bis(2-ethyl-hexanoate) as with polyethylene glycol 400 bis(2-ethylhexanoate).

Examples 45—46

The data in Table 2 and the graph in Figure 10 demonstrate that with a total of 12% of polyethylene oxide soft segment plus methoxy polyethylene glycol 550 2-ethylhexanoate plasticizer (based on the total quantity of soft segment, plasticizer and matrix resin) (rather than polyethylene glycol 400 bis(2-ethylhexanoate) plasticizer as used in Examples 1—8), in a 30% glass-reinforced composition, $T_{pk}$ is reduced to a point substantially below that which would be found in compositions containing an equivalent amount of either the soft segment or the plasticizer used alone. It can also be seen that the absolute values of $T_{pk}$ are actually somewhat lower in compositions containing the mono-methoxy plasticizer as compared with compositions containing the bis(2-ethylhexanoate) plasticizer.

Example 47

The data in Table 2 (Examples 5 and 47) demonstrate that the presence or absence of 0.6% of "Epon" 1009 does not have a significant effect on $T_{pk}$. A small quantity of "Epon" 1009 added to the compositions of the present invention generally improves mechanical properties.

Examples 48—50

The data in Table 2 and the graph in Figure 11 demonstrate that with a total of 12% polyethylene oxide soft segment plus polyethylene glycol 400 bis(2-ethylhexanoate) plasticizer (based on the total quantity of soft segment, plasticizer and matrix resin) in a 30% glass-reinforced polyethylene terephthalate/ polybutylene terephthalate composition (rather than the polyethylene terephthalate composition used in Examples 1—8), $T_{pk}$ is reduced to a point substantially below that which would be found in compositions

containing an equivalent amount of either the soft segment or the plasticizer used alone. It can also be seen that the absolute values of $T_{pk}$ are substantially lower in the PET/PBT compositions as compared with the straight PET compositions.

Examples 51—54

Polyethylene oxide terephthalate/polyethylene terephthalate copolymers containing 46% polyethylene oxide of various molecular weights from 400—1450 were let down to a level of 6% polyethylene oxide by compounding with polyethylene terephthalate in a 28 mm Werner and Pfleiderer extruder. These blends were then compounded with glass and the other ingredients used in the Examples described above in a 2 inch single screw extruder as described above. The compositions contained a total of 11.6% polyethylene oxide soft segment plus polyethylene glycol 400 bis(2-ethylhexanoate) plasticizer (based on the total quantity of soft segment, plasticizer and matrix resin) of which 48.7% was polyethylene oxide soft segment. The compositions each contained:

| | |
|---|---|
| polyethylene oxide | 3.7% |
| polyethylene terephthalate | 57.7% |
| plasticizer A | 3.9% |
| crystallization promotor | 3.8% |
| "Epon" 1009 | 0.6% |
| "Irganox" 1010 | 0.3% |
| glass fibers | 30.0% |
| | 100.0% |

The resulting compositions each had a $T_{pk}$ value below 85°C. The specific $T_{pk}$ value measured for each of the compositions is as follows:

| Average M.W. of the PEO | $T_{pk}$ (°C) |
|---|---|
| 400 | 84.9 |
| 600 | 84.8 |
| 1000 | 84.8 |
| 1450 | 82.6 |

**Claims**

1. A molding composition comprising

(A) 20—90% by weight based on the total of components A, B, C, D and E of a matrix resin having an inherent viscosity of at least 0.4, said matrix resin being selected from the group consisting of polyethylene terephthalate homopolymers, polyethylene terephthalate/polybutylene terephthalate mixtures, polyethylene terephthalate/polybutylene terephthalate copolymers, and mixtures thereof, wherein said polyethylene terephthalate/polybutylene terephthalate copolymers and mixtures contain at least 70% by weight ethylene terephthalate units,

(B) 1—15 parts by weight per hundred parts of matrix resin (A) of polyalkylene oxide soft segments incorporated into the polymer chain of matrix resin A, said polyalkylene oxide soft segments having a molecular weight of 200—3250,

(C) 1—15 parts by weight per hundred parts of matrix resin (A) of a plasticizer of the formula

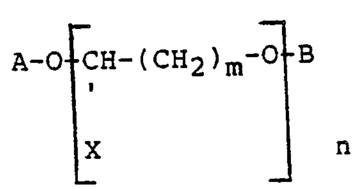

where

m is an integer from 1 to 3, inclusive,

n is an integer from 4 to 25, inclusive,
A is alkyl, acyl or aroyl of 1—10 carbon atoms,
B is alkyl, acyl or aroyl of 1—10 carbon atoms, and
X is H, $CH_3$ or $C_2H_5$,
provided that the total quantity of (B) and (C) must be 9—20 parts by weight per hundred parts of matrix resin (A),

(D) 1—16 parts by weight per hundred parts of matrix resin (A) of a crystallization promotor derived from

(a) at least one source of carboxyl groups selected from the group consisting of hydrocarbon acids containing 7—54 carbon atoms and organic polymers having at least one carboxyl group attached thereto, and

(b) at least one source of metal ions capable of reacting with the carboxyl groups of (a) selected from the group consisting of sodium and potassium ion sources, where the concentration of said metal in said matrix resin (A) is at least 0.01 weight percent, and optionally

(E) a material selected from the group consisting of reinforcing and filling materials.

2. The compositions of Claim 1 wherein the crystallization promotor is derived from

(a) at least one source of carboxyl groups consisting of hydrocarbon acids containing 7—25 carbon atoms and organic polymers containing pendant carboxyl groups, and

(b) at least one source of metal ions capable of reacting with the carboxyl groups of (a) selected from the group consisting of sodium and potassium ion sources.

3. The compositions of Claim 1 wherein the plasticizer is as described above where m is one.

4. The compositions of Claim 1 wherein the plasticizer is as described above where n is 4—14.

5. The compositions of Claim 1 wherein the plasticizer is as described above where A is methyl or acyl of 8 carbon atoms.

6. The compositions of Claim 1 wherein the plasticizer is as described above where B is acyl of 8 carbon atoms.

7. The composition of Claim 1 wherein the plasticizer is as described above where X is H.

8. The compositions of Claim 1 wherein the plasticizer is as described above where m is one, n is 4—14, and X is H.

9. The compositions of Claim 8 wherein the plasticizer is as described above where A is methyl or acyl of 8 carbon atoms and B is acyl of 8 carbon atoms.

10. The compositions of Claim 9 wherein the plasticizer is as described above where n is 7—13.

11. The compositions of Claim 10 wherein the plasticizer is polyethylene glycol 400 bis(2-ethylhexanoate).

12. The compositions of Claim 10 wherein the plasticizer is tetraethylene glycol bis(2-ethylhexanoate).

13. The compositions of Claim 10 where the plasticizer is methoxy polyethylene glycol 550 2-ethylhexanoate.

14. The compositions of Claim 1 wherein the plasticizer (C) comprises 2—12 parts by weight per hundred parts of matrix resin (A).

15. The compositions of Claim 1 wherein the plasticizer (C) comprises 4—8 parts by weight per hundred parts of matrix resin (A).

16. The compositions of Claim 1 wherein the matrix resin (A) is polyethylene terephthalate homopolymer.

17. The compositions of Claim 16 wherein the polyethylene terephthalate homopolymer has an inherent viscosity of 0.4—1.2.

18. The compositions of Claim 1 wherein the matrix resin (A) comprises 30—80% by weight of the composition based on the total of components A, B, C, D and E.

19. The compositions of Claim 1 wherein the matrix resin (A) comprises 40—80% by weight of the composition based on the total of components A, B, C, D and E.

20. The compositions of Claim 1 wherein the polyalkylene oxide soft segments (B) comprise 2—12 parts by weight per hundred parts of matrix resin (A).

21. The compositions of Claim 1 wherein the polyalkylene oxide soft segments (B) comprise 4—8 parts by weight per hundred parts of matrix resin (A).

22. The compositions of Claim 1 wherein the polyalkylene oxide is polyethylene oxide.

23. The compositions of Claim 1 wherein the polyalkylene oxide soft segments have a molecular weight of 600—1500.

24. The compositions of Claim 1 wherein the total proportion of the soft segments (B) and the plasticizer (C) is 9—18 parts by weight per hundred parts of matrix resin (A).

25. The compositions of Claim 1 wherein the total proportion of the soft segments (B) and the plasticizer (C) is 12—18 parts by weight per hundred parts of matrix resin (A).

26. The compositions of Claim 1 wherein the relative quantities of soft segment (B) and plasticizer (C) is from 85:15 to 15:85.

27. The compositions of Claim 1 wherein the relative quantities of soft segment (B) and plasticizer (C) is from 75:25 to 40:60.

28. The compositions of Claim 1 wherein the relative quantities of soft segment (B) and plasticizer (C) is from 65:35 to 40:60.

29. The compositions of Claim 1 wherein the crystallization promotor (D) comprises 2—9 parts by weight per hundred parts of matrix resin (A).

30. The compositions of Claim 1 wherein the crystallization promotor (D) comprises 3—6 parts by weight per hundred parts of matrix resin (A).

31. The compositions of Claim 1 wherein the crystallization promotor (D) is an organic ionic hydrocarbon copolymer of an alpha-olefin of 2—5 carbon atoms and an alpha,beta-ethylenically unsaturated carboxylic acid of 3—5 carbon atoms in which the carboxyl groups have been at least partially neutralized with sodium or potassium cations.

32. The compositions of Claim 1 wherein the reinforcing and filling materials (E) are selected from the group consisting of glass, graphite, and aramid fibers, glass beads, aluminum silicate, asbestos, mica and calcium carbonate.

33. The compositions of Claim 1 wherein the reinforcing and filling material (E) is glass fibers.

34. Molded articles made from the composition of Claim 1.

**Patentansprüche**

1. Preßmasse, welche umfaßt

(A) 20 bis 90 Gew.-%, bezogen auf die Komponenten A, B, C, D und E insgesamt, eines Matrixharzes einer inhärenten Viskosität von wenigstens 0,4, wobei das Matrixharz ausgewählt ist aus der aus Polyethylenterephthalathomopolymeren, Polyethylenterephthalat/Polybutylenterephthalat-Mischungen, Polyethylenterephthalat/Polybutylenterephthalat-Copolymeren und Mischungen davon bestehenden Gruppe, und worin die Polyethylenterephthalat/Polybutylenterephthalat-Copolymeren und Mischungen wenigstens 70 Gew.-% Ethylenterephthalateinheiten enthalten,

(B) 1 bis 15 Gew.-Teile auf 100 Gew.-Teile Matrixharz (A) in die Polymerkette des Matrixharzes (A) eingebrachte weiche Polyalkylenoxidsegmente, wobei die weichen Polyalkylenoxidsegmente ein Molekulargewicht von 200 bis 3250 haben,

(C) 1 bis 15 Gew.-Teile auf 100 Gew.-Teile Matrixharz (A) eines Plastifizierers der Formel

$$A{-}O{\left[\underset{\displaystyle X}{\underset{|}{CH}}{-}(CH_2)_m{-}O\right]}_n{-}B$$

worin

m eine ganze Zahl von 1 bis 3 einschließlich ist,
n eine ganze Zahl von 4 bis 25 einschließlich ist,
A Alkyl, Acyl oder Aroyl mit 1 bis 10 Kohlenstoffatomen ist,
B Alkyl, Acyl oder Aroyl mit 1 bis 10 Kohlenstoffatomen ist, und
X H, $CH_3$ oder $C_2H_5$ ist,

mit der Maßgabe, daß die Gesamtmenge an (B) und (C) 9 bis 20 Gew.-Teile auf 100 Gew.-Teile Matrixharz (A) ausmachen muß,

(D) 1 bis 16 Gew.-Teile auf 100 Gew.-Teile Matrixharz (A) eines Kristallisationspromotors, der abgeleitet ist von

(a) wenigstens einer Carboxylgruppenquelle, ausgewählt aus der aus Kohlenwasserstoffsäuren mit 7 bis 54 Kohlenstoffatomen und organischen Polymeren mit wenigstens einer daran befestigten Carboxylgruppe bestehenden Gruppe und

(b) wenigstens einer Metallionenquelle, die in der Lage ist, mit den Carboxylgruppen aus (a) zu reagieren und ausgewählt ist aus der aus Natrium- und Kaliumionenquellen bestehenden Gruppe, wobei die Konzentration des Metalls im Matrixharz (A) wenigstens 0,01 Gew.-% beträgt, und gegebenenfalls

(E) ein Material, das aus der aus Verstärkungs- und Füllmaterialien bestehenden Gruppe ausgewählt ist.

2. Massen nach Anspruch 1, worin der Kristallisationspromotor abgeleitet ist von

(a) wenigstens einer Carboxylgruppenquelle, die aus Kohlenwasserstoffsäuren mit 7 bis 25 Kohlenstoffatomen und organischen Polymeren mit anhängenden Carboxylgruppen besteht, und

(b) wenigstens einer Metallionenquelle, die in der Lage ist, mit den Carboxylgruppen aus (a) zu reagieren, ausgewählt aus der aus Natrium- und Kaliumionenquellen bestehenden Gruppe.

3. Massen nach Anspruch 1, worin der Plastifizierer wie oben beschrieben ist, wobei m 1 ist.

4. Massen nach Anspruch 1, worin der Plastifizierer wie oben beschrieben ist, wobei n 4 bis 14 ist.

5. Massen nach Anspruch 1, worin der Plastifizierer wie oben beschrieben ist, wobei A Methyl oder Acyl mit 8 Kohlenstoffatomen ist.

6. Massen nach Anspruch 1, worin der Plastifizierer wie oben beschrieben ist, wobei B Acyl mit 8 Kohlenstoffatomen ist.

7. Massen nach Anspruch 1, worin der Plastifizierer wie oben beschrieben ist, wobei X H ist.

8. Massen nach Anspruch 1, worin der Plastifizierer wie oben beschrieben ist, wobei m 1 ist, n 4 bis 14 ist und X H ist.

9. Massen nach Anspruch 8, worin der Plastifizierer wie oben beschrieben ist, wobei A Methyl oder Acyl mit 8 Kohlenstoffatomen ist und B Acyl mit 8 Kohlenstoffatomen ist.

10. Massen nach Anspruch 9, worin der Plastifizierer wie oben beschrieben ist, wobei n 7 bis 13 ist.

11. Massen nach Anspruch 10, worin der Plastifizierer Polyethylenglykol-400-bis(2-ethylhexanoat) ist.

12. Massen nach Anspruch 10, worin der Plastifizierer Tetraethylenglykolbis(2-ethylhexanoat) ist.

13. Massen nach Anspruch 10, worin der Plastifizierer Methoxypolyethylenglykol-550-2-ethylhexanoat ist.

14. Massen nach Anspruch 1, worin der Plastifizierer (C) 2 bis 12 Gew.-Teile auf 100 Gew.-Teile Matrixharz (A) ausmacht.

15. Massen nach Anspruch 1, worin der Plastifizierer (C) 4 bis 8 Gew.-Teile auf 100 Gew.-Teile Matrixharz (A) ausmacht.

16. Massen nach Anspruch 1, worin das Matrixharz (A) Polyethylenterephthalat-Homopolymer ist.

17. Massen nach Anspruch 16, worin das Polyethylenterephthalat-Homopolymer eine innere Viskosität von 0,4 bis 1,2 aufweist.

18. Massen nach Anspruch 1, worin das Matrixharz (A) 30 bis 80 Gew.-% der Zusammensetzung, bezogen auf die Komponenten A, B, C, D und E insgesamt, ausmacht.

19. Massen nach Anspruch 1, worin das Matrixharz (A) 40 bis 80 Gew.-% der Zusammensetzung, bezogen auf die Komponenten A, B, C, D und E insgesamt, ausmacht.

20. Massen nach Anspruch 1, worin die weichen Polyalkylenoxidsegmente (B) 2 bis 12 Gew.-Teile auf 100 Gew.-Teile Matrixharz (A) ausmachen.

21. Massen nach Anspruch 1, worin die weichen Polyalkylenoxidsegmente (B) 4 bis 8 Gew.-Teile auf 100 Gew.-Teile Matrixharz (A) ausmachen.

22. Massen nach Anspruch 1, worin das Polyalkylenoxid Polyethylenoxid ist.

23. Massen nach Anspruch 1, worin die weichen Polyalkylenoxidsegmente ein Molekulargewicht von 600 bis 1500 aufweisen.

24. Massen nach Anspruch 1, worin der Gesamtanteil der weichen Segmente (B) und des Plastifizierers (C) 9 bis 18 Gew.-Teile auf 100 Gew.-Teile Matrixharz (A) ausmacht.

25. Massen nach Anspruch 1, worin der Gesamtanteil der weichen Segmente (B) und des Plastifizierers (C) 12 bis 18 Gew.-Teile auf 100 Gew.-Teile Matrixharz (A) ausmacht.

26. Massen nach Anspruch 1, worin die relativen Mengen an weichem Segmente (B) und Plastifizierer (C) 85:15 bis 15:85 sind.

27. Massen nach Anspruch 1, worin die relativen Mengen an weichem Segmente (B) und Plastifizierer (C) 75:25 bis 40:60 sind.

28. Massen nach Anspruch 1, worin die relativen Mengen an weichem Segmente (B) und an Plastifizierer (C) 65:35 bis 40:60 sind.

29. Massen nach Anspruch 1, worin der Kristallisationspromotor (D) 2 bis 9 Gew.-Teile auf 100 Gew.-Teile Matrixharz (A) ausmacht.

30. Massen nach Anspruch 1, worin der Kristallisationspromotor (D) 3 bis 6 Gew.-Teile auf 100 Gew.-Teile Matrixharz (A) ausmacht.

31. Massen nach Anspruch 1, worin der Kristallisationspromotor (D) ein organisches ionisches Kohlenwasserstoffcopolymer eines α-Olefins mit 2 bis 5 Kohlenstoffatomen und einer α,β-ethylenisch ungesättigten Carbonsäure mit 3 bis 5 Kohlenstoffatomen ist, worin die Carboxylgruppen zumindest teilweise mit Natrium- oder Kaliumkationen neutralisiert worden sind.

32. Massen nach Anspruch 1, worin die Verstärkungs- und Füllmaterialien (E) aus der aus Glas, Graphit und Aramidfasern, Glasperlen, Aluminiumsilicat, Asbest, Glimmer und Calciumcarbonat bestehenden Gruppe ausgewählt sind.

33. Massen nach Anspruch 1, worin das Verstärkungs- und Füllmaterial (E) aus Glasfasern besteht.

34. Formteile, hergestellt aus der Zusammensetzung nach Anspruch 1.

**Revendications**

1. Une composition à mouler comprenant

(A) 20 à 90% en poids, sur la base du total des composants A, B, C, D et E, d'une résine de matrice ayant une viscosité inhérente d'au moins 0,4, ladite résine de matrice étant choisie dans le groupe formé par les homopolymères poly(téréphtalate d'éthylène), les mélanges poly(téréphtalate d'éthylène)/poly(téréphtalate de butylène), les copolymères poly(téréphtalate d'éthylène)/poly(téréphtalate de butylène), et leurs mélanges, lesdits copolymères et mélanges poly(téréphtalate d'éthylène)/poly(téréphtalate de butylène) contenant au moins 70% en poids de motifs téréphtalate d'éthylène,

(B) 1 à 15 parties en poids pour cent parties de la résine de matrice (A) de segments mous de poly(oxyde d'alkylène) incorporés dans la chaîne polymère de la résine de matrice A, lesdits segments

mous de poly(oxyde d'alkylène) ayant un poids moléculaire de 200 à 3250,

(C) 1 à 15 parties en poids pour cent parties de la résine de matrice (A) d'un plastifiant de la formule

$$A-O\left[\begin{array}{l}CH-(CH_2)_m-O\\ |\\ X\end{array}\right]_n B$$

où

m est un nombre entier de 1 à 3 inclusivement,

n est un nombre entier de 4 à 25 inclusivement,

A est un groupe alkyle, acyle ou aroyle de 1 à 10 atomes de carbone,

B est un groupe alkyle, acyle ou aroyle de 1 à 10 atomes de carbone, et

X est H, $CH_3$ ou $C_2H_5$,

avec la condition que la quantité totale de (B) et (C) doive être de 9 à 20 parties en poids pour cent parties de la résine de matrice (A),

(D) 1 à 16 parties en poids pour cent parties de la résine de matrice (A) d'un promoteur de cristallisation dérivé de

(a) au moins une source de groupes carboxyles choisie dans le groupe formé par les acides hydrocarbonés contenant 7 à 54 atomes de carbone et les polymères organiques auxquels est attaché au moins un groupe carboxyle, et

(b) au moins une source d'ions de métal, capable de réagir avec les groupes carboxyles de (a), choisie dans le groupe formé par les sources d'ions sodium et potassium, la concentration dudit métal dans ladite résine de matrice (A) étant d'au moins 0,01 pour cent en poids, et, facultativement,

(E) une matière choisie dans le groupe formé par les matières de renforcement et de charge.

2. Les compositions de la revendication 1, dans lesquelles le promoteur de cristallisation est dérivé de

(a) au moins une source de groupes carboxyles constituée d'acides hydrocarbés contenant 7 à 25 atomes de carbone et de polymères organiques contenant des groupes carboxyles latéraux, et

(b) au moins une source d'ions de métal, capable de réagir avec les groupes carboxyles de (a), choisie dans le groupe formé par les sources d'ions sodium et potassium.

3. Les compositions de la revendication 1, dans lesquelles le plastifiant est un plastifiant tel que décrit ci-dessus où m est un.

4. Les compositions de la revendication 1, dans lesquelles le plastifiant est un plastifiant tel que décrit ci-dessus où n est 4 à 14.

5. Les compositions de la revendication 1, dans lesquelles le plastifiant est un plastifiant tel que décrit ci-dessus où A est le groupe méthyle ou un groupe acyle de 8 atomes de carbone.

6. Les compositions de la revendication 1, dans lesquelles le plastifiant est un plastifiant tel que décrit ci-dessus où B est un groupe acyle de 8 atomes de carbone.

7. Les compositions de la revendication 1, dans lesquelles le plastifiant est un plastifiant tel que décrit ci-dessus où X est H.

8. Les compositions de la revendication 1, dans lesquelles le plastifiant est un plastifiant tel que décrit ci-dessus où m est un, n est 4 à 14 et X est H.

9. Les compositions de la revendication 8, dans lesquelles le plastifiant est un plastifiant tel que décrit ci-dessus où A est le groupe méthyle ou un groupe acyle de 8 atomes de carbone et B est un groupe acyle de 8 atomes de carbone.

10. Les compositions de la revendication 9, dans lesquelles le plastifiant est un plastifiant tel que décrit ci-dessus où n est 7 à 13.

11. Les compositions de la revendication 10, dans lesquelles le plastifiant est le bis(2-éthylhexanoate) de polyéthylène-glycol 400.

12. Les compositions de la revendication 10, dans lesquelles le plastifiant est le bis(2-éthylhexanoate) de tétraéthylène-glycol.

13. Les compositions de la revendication 10, dans lesquelles le plastifiant est le 2-éthylhexanoate de méthoxy-polyéthylène-glycol 550.

14. Les compositions de la revendication 1, dans lesquelles le plastifiant (C) est présent à raison de 2 à 12 parties en poids pour cent parties de la résine de matrice (A).

15. Les compositions de la revendication 1, dans lesquelles le plastifiant (C) est présent à raison de 4 à 8 parties en poids pour cent parties de la résine de matrice (A).

16. Les compositions de la revendication 1, dans lesquelles la matrice de résine (A) est un homopolymère poly(téréphtalate d'éthylène).

17. Les compositions de la revendication 16, dans lesquelles l'homopolymère poly(téréphtalate d'éthylène) a une viscosité inhérente de 0,4 à 1,2.

18. Les compositions de la revendication 1, dans lesquelles la résine de matrice (A) constitue 30 à 80% en poids de la composition sur la base du total des composants A, B, C, D et E.

19. Les compositions de la revendication 1, dans lesquelles la résine de matrice (A) constitue 40 à 80% en poids de la composition sur la base du total des composants A, B, C, D et E.

20. Les compositions de la revendication 1, dans lesquelles les segments mous de poly(oxyde d'alkylène) (B) sont présents à raison de 2 à 12 parties en poids pour cent parties de la résine de matrice (A).

21. Les compositions de la revendication 1, dans lesquelles les segments mous de poly(oxyde d'alkylène) (B) sont présents à raison de 4 à 8 parties en poids pour cent parties de la résine de matrice (A).

22. Les compositions de la revendication 1, dans lesquelles le poly(oxyde d'alkylène) est un poly(oxyde d'éthylène).

23. Les compositions de la revendication 1, dans lesquelles les segments mous de poly(oxyde d'alkylène) ont un poids moléculaire de 600 à 1500.

24. Les compositions de la revendication 1, dans lesquelles la proportion totale des segments mous (B) et du plastifiant (C) est de 9 à 18 parties en poids pour cent parties de la résine de matrice (A).

25. Les compositions de la revendication 1, dans lesquelles la proportion totale des segments mous (B) et du plastifiant (C) est de 12 à 18 parties en poids pour cent parties de la résine de matrice (A).

26. Les compositions de la revendication 1, dans lesquelles les quantités relatives de segment mou (B) et de plastifiant (C) sont de 85:15 à 15:85.

27. Les compositions de la revendication 1, dans lesquelles les quantités relatives de segment mou (B) et de plastifiant (C) sont de 75:25 à 40:60.

28. Les compositions de la revendication 1, dans lesquelles les quantités relatives de segment mou (B) et de plastifiant (C) sont de 65:35 à 40:60.

29. Les compositions de la revendication 1, dans lesquelles le promoteur de cristallisation (D) est présent à raison de 2 à 9 parties en poids pour cent parties de la résine de matrice (A).

30. Les compositions de la revendication 1, dans lesquelles le promoteur de cristallisation (D) est présent à raison de 3 à 6 parties en poids pour cent parties de la résine de matrice (A).

31. Les compositions de la revendication 1, dans lesquelles le promoteur de cristallisation (D) est un copolymère organique hydrocarboné ionique d'une alpha-oléfine de 2 à 5 atomes de carbone et d'un acide carboxylique éthyléniquement insaturé en alpha,bêta de 3 à 5 atomes de carbone, dans lequel les groupes carboxyles ont été au moins partiellement neutralisés par des cations sodium ou potassium.

32. Les compositions de la revendication 1, dans lesquelles les matières de renforcement et de charge (E) sont choisies dans le groupe formé par les fibres de verre, de graphite et d'aramide, les perles de verre, le silicate d'aluminium, l'amiante, le mica et le carbonate de calcium.

33. Les compositions de la revendication 1, dans lesquelles la matière de renforcement et de charge (E) consiste en fibres de verre.

34. Articles moulés fabriqués à partir de la composition de la revendication 1.

FIG. 1

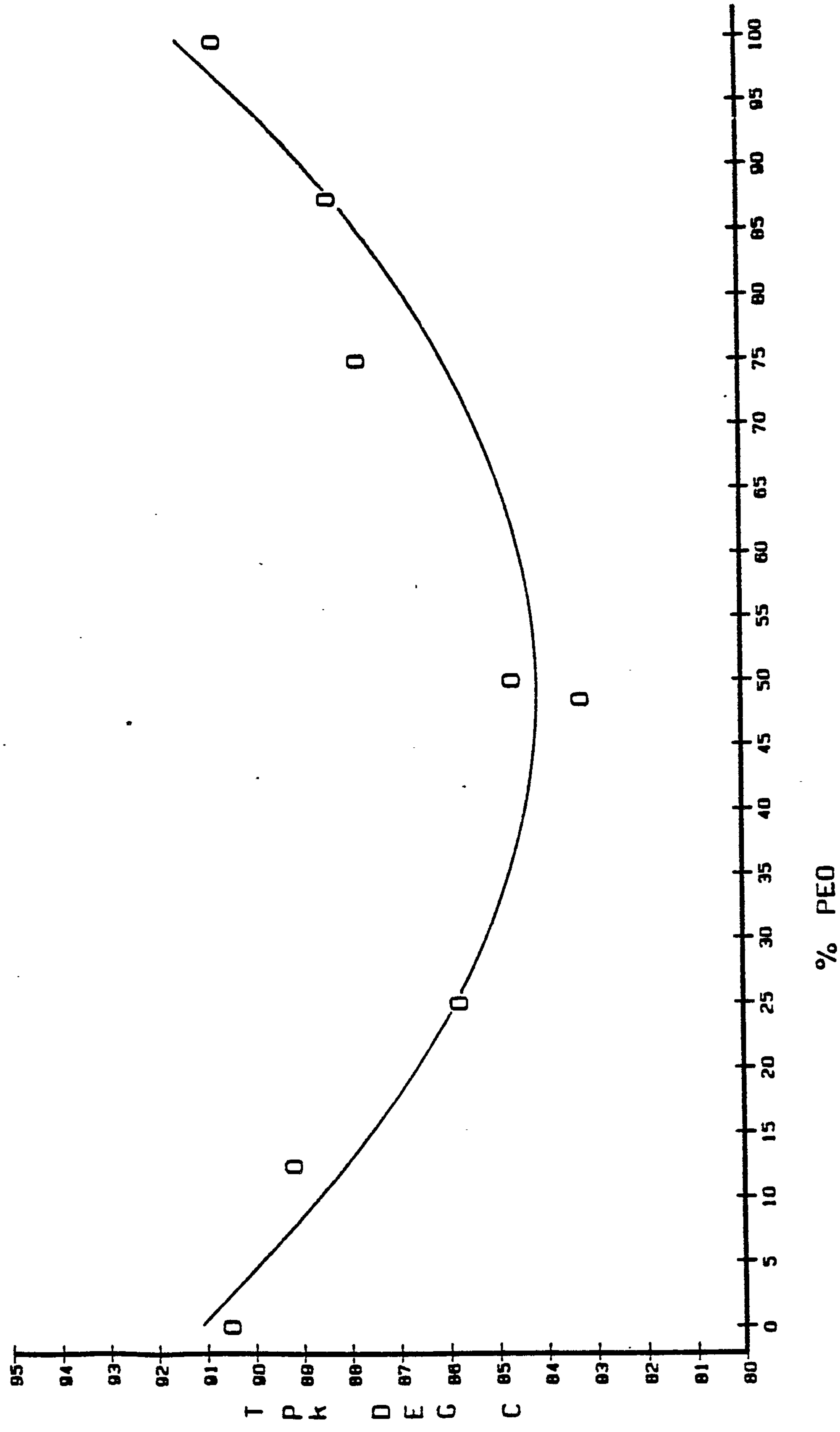
% PEO
T Pk DEG C
0
5
10
15
20
25
30
35
40
45
50
55
60
65
70
75
80
85
90
95
100
80
81
82
83
84
85
86
87
88
89
90
91
92
93
94
95

FIG. 2

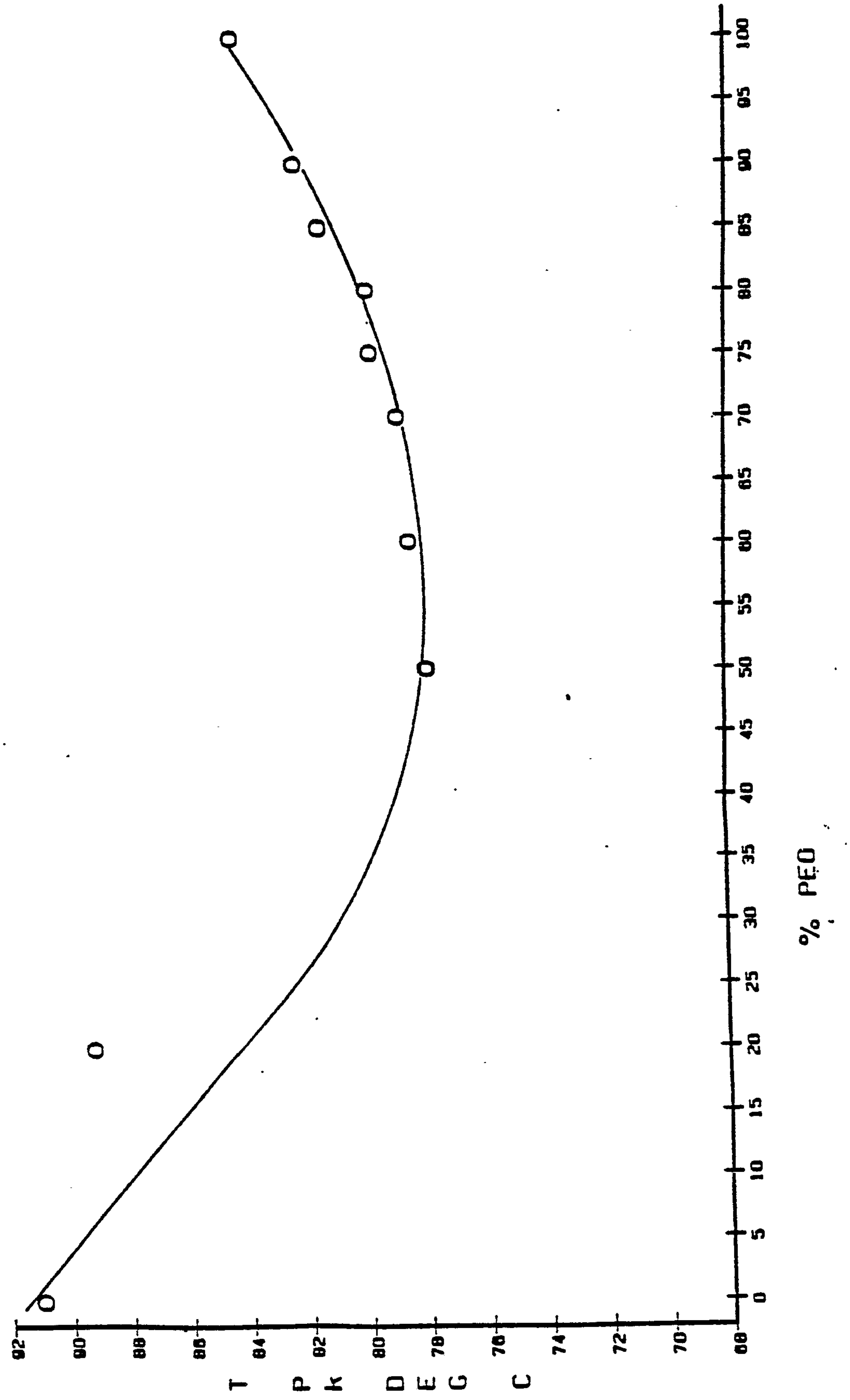
T Pk DEG C
92
90
88
86
84
82
80
78
76
74
72
70
68
% PEO
0
5
10
15
20
25
30
35
40
45
50
55
60
65
70
75
80
85
90
95
100

FIG. 3

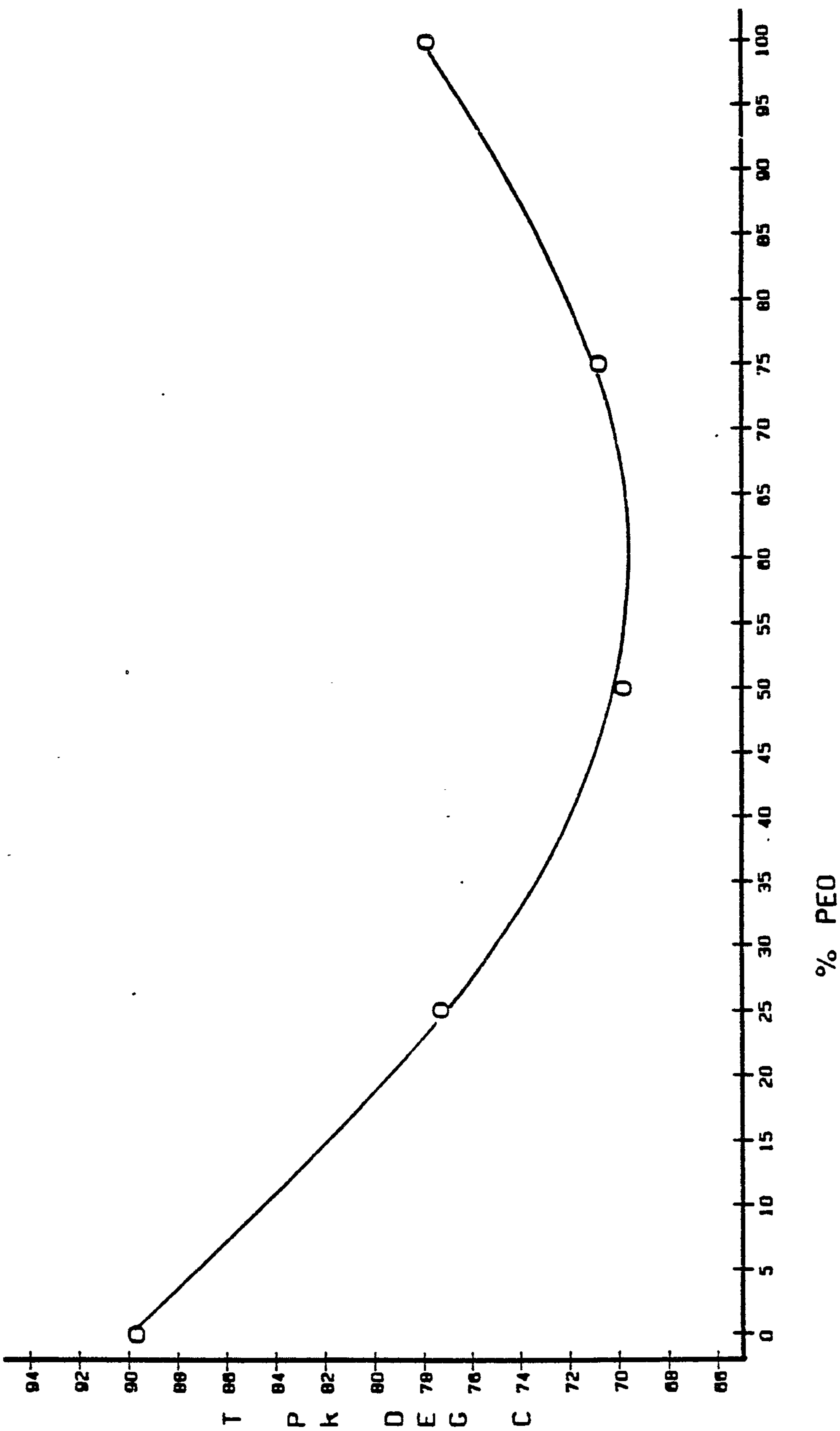
T Pk DEG C
94
92
90
88
86
84
82
80
78
76
74
72
70
68
66
0
5
10
15
20
25
30
35
40
45
50
55
60
65
70
75
80
85
90
95
100
% PEO

FIG. 4

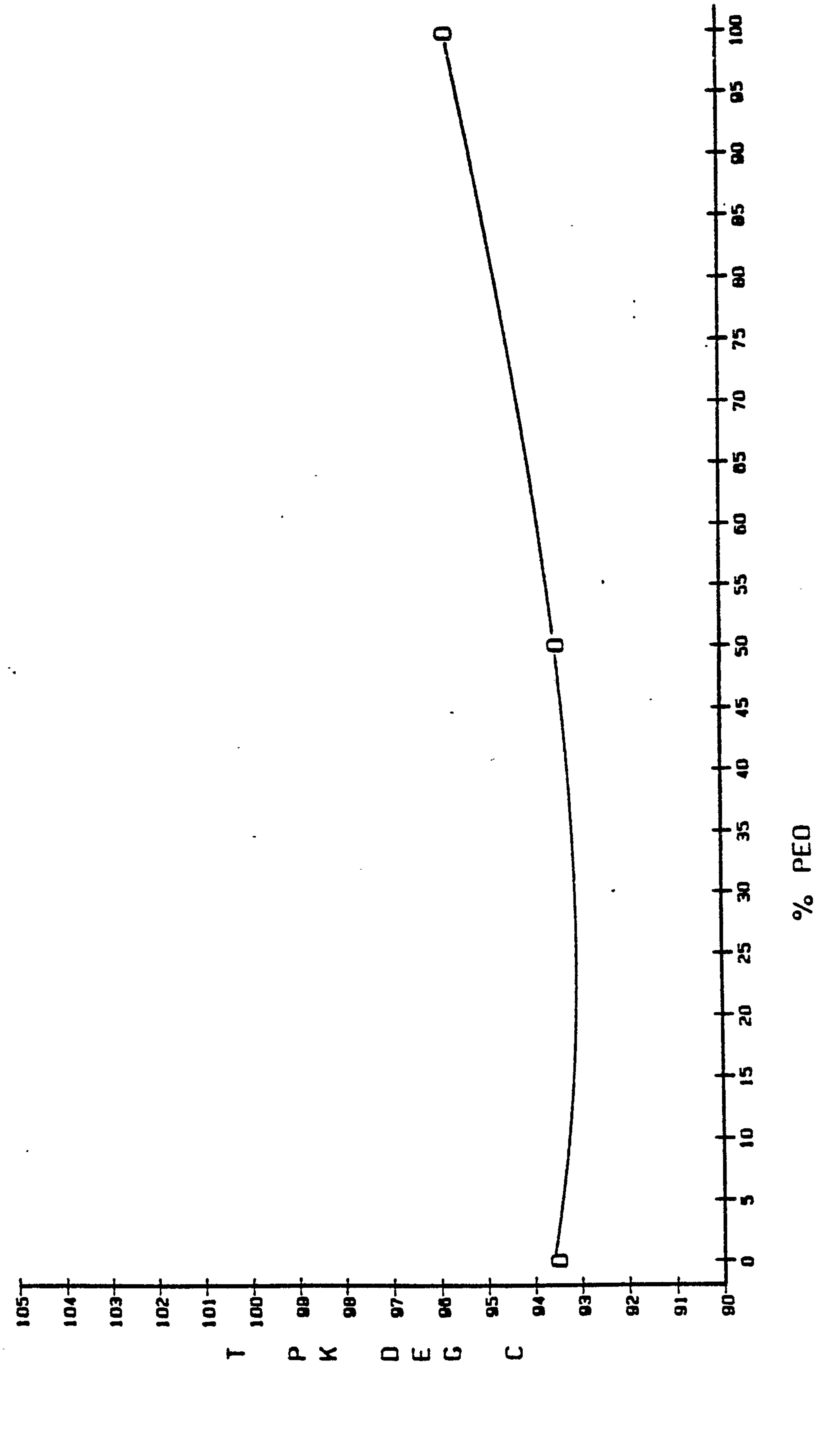
T PK DEG C
% PED
90
91
92
93
94
95
96
97
98
99
100
101
102
103
104
105
0
5
10
15
20
25
30
35
40
45
50
55
60
65
70
75
80
85
90
95
100

FIG. 5

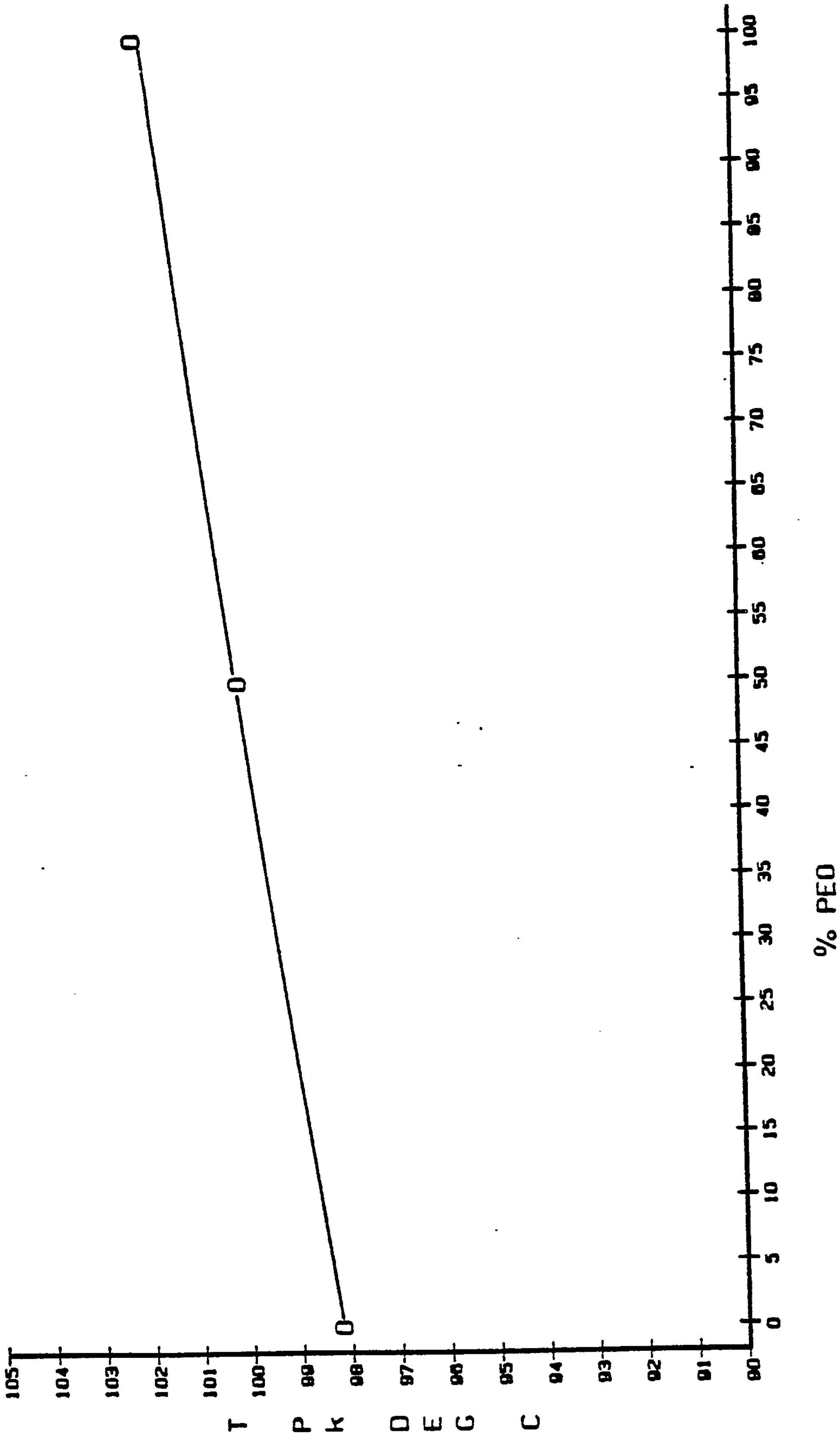

T Pk DEG C
105
104
103
102
101
100
99
98
97
96
95
94
93
92
91
90
0
5
10
15
20
25
30
35
40
45
50
55
60
65
70
75
80
85
90
95
100
% PEO

FIG. 6

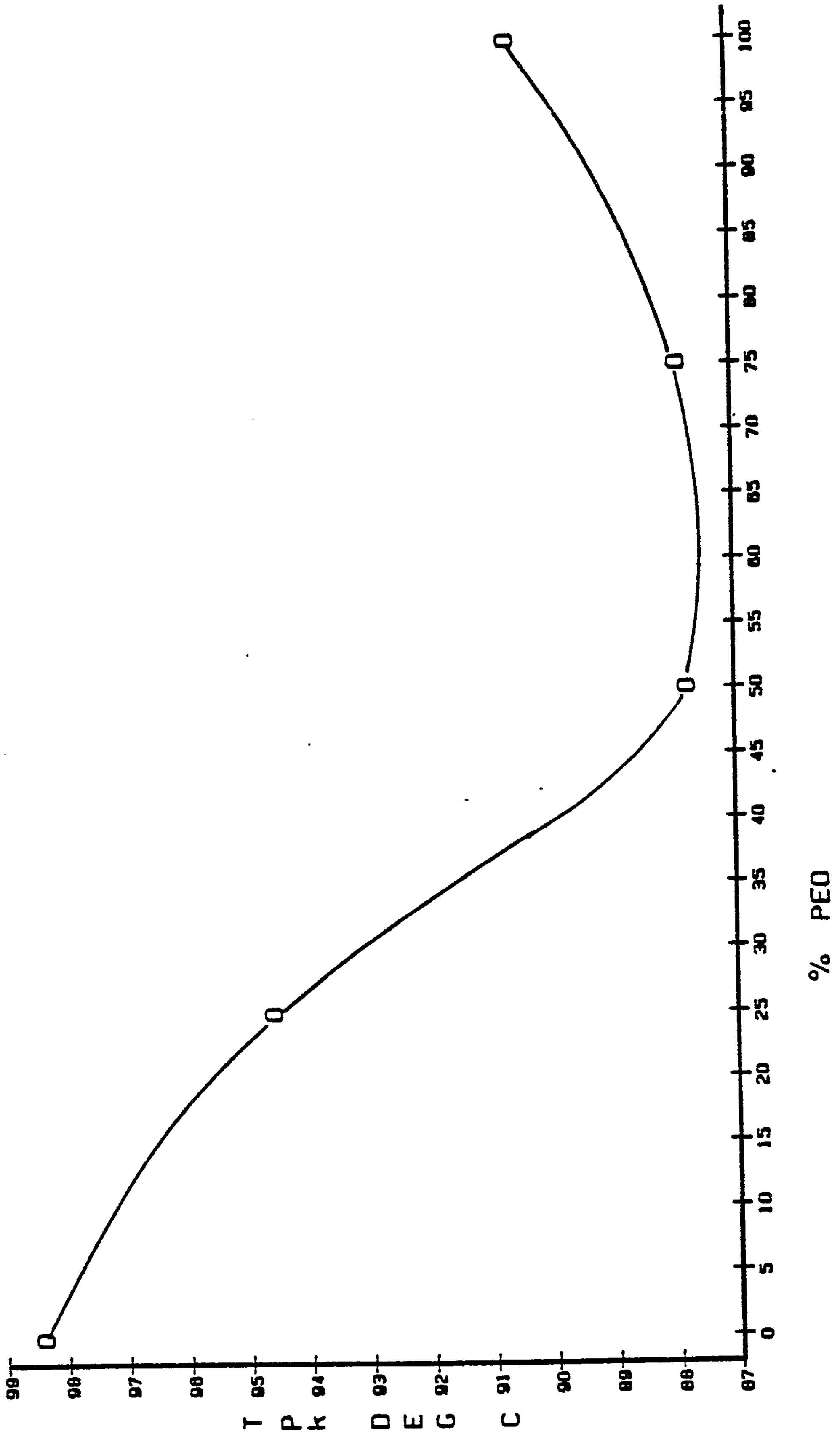

FIG. 7

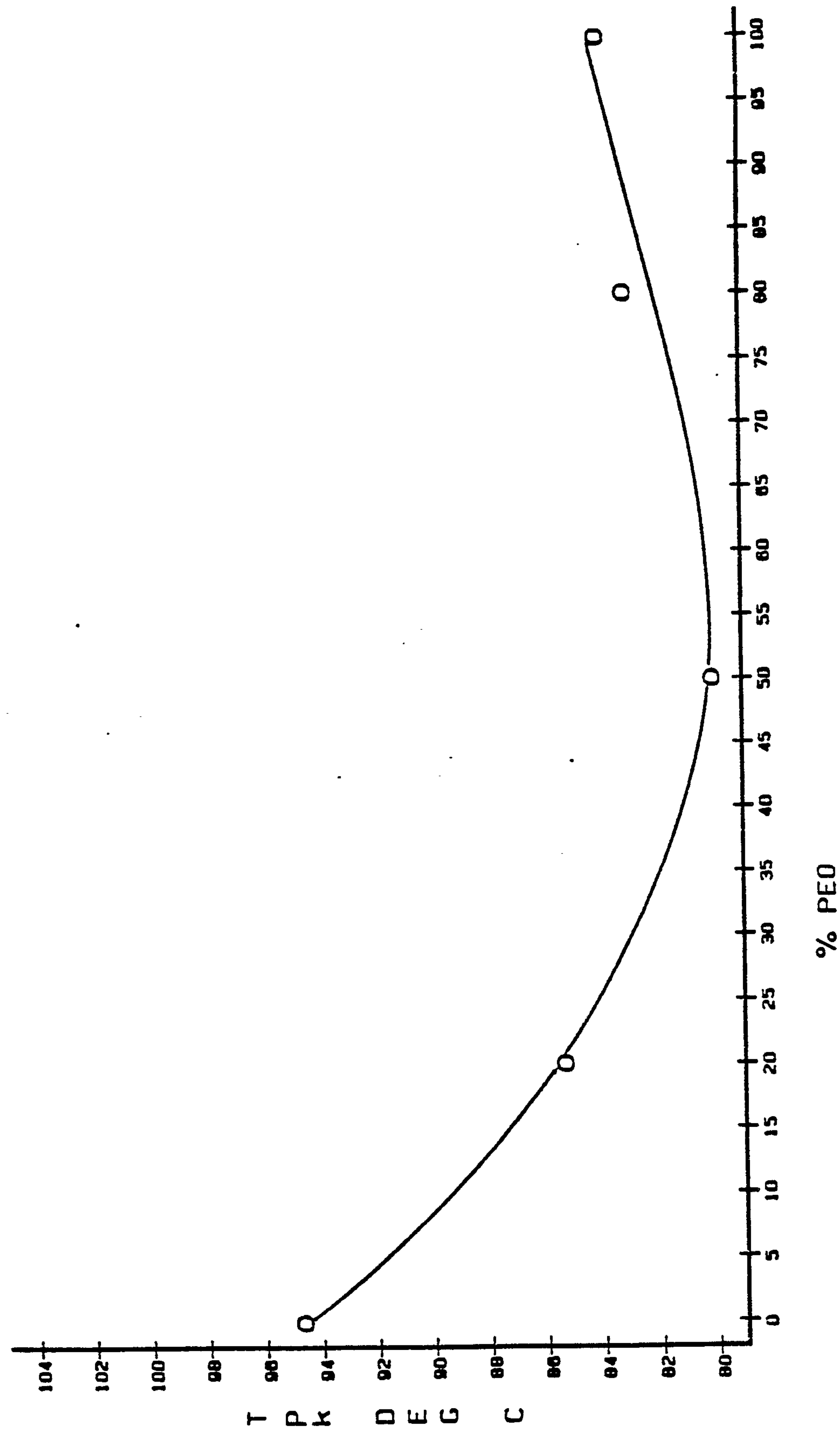
T Pk DEG C
104
102
100
98
96
94
92
90
88
86
84
82
80
0
5
10
15
20
25
30
35
40
45
50
55
60
65
70
75
80
85
90
95
100
% PEO

FIG. 8

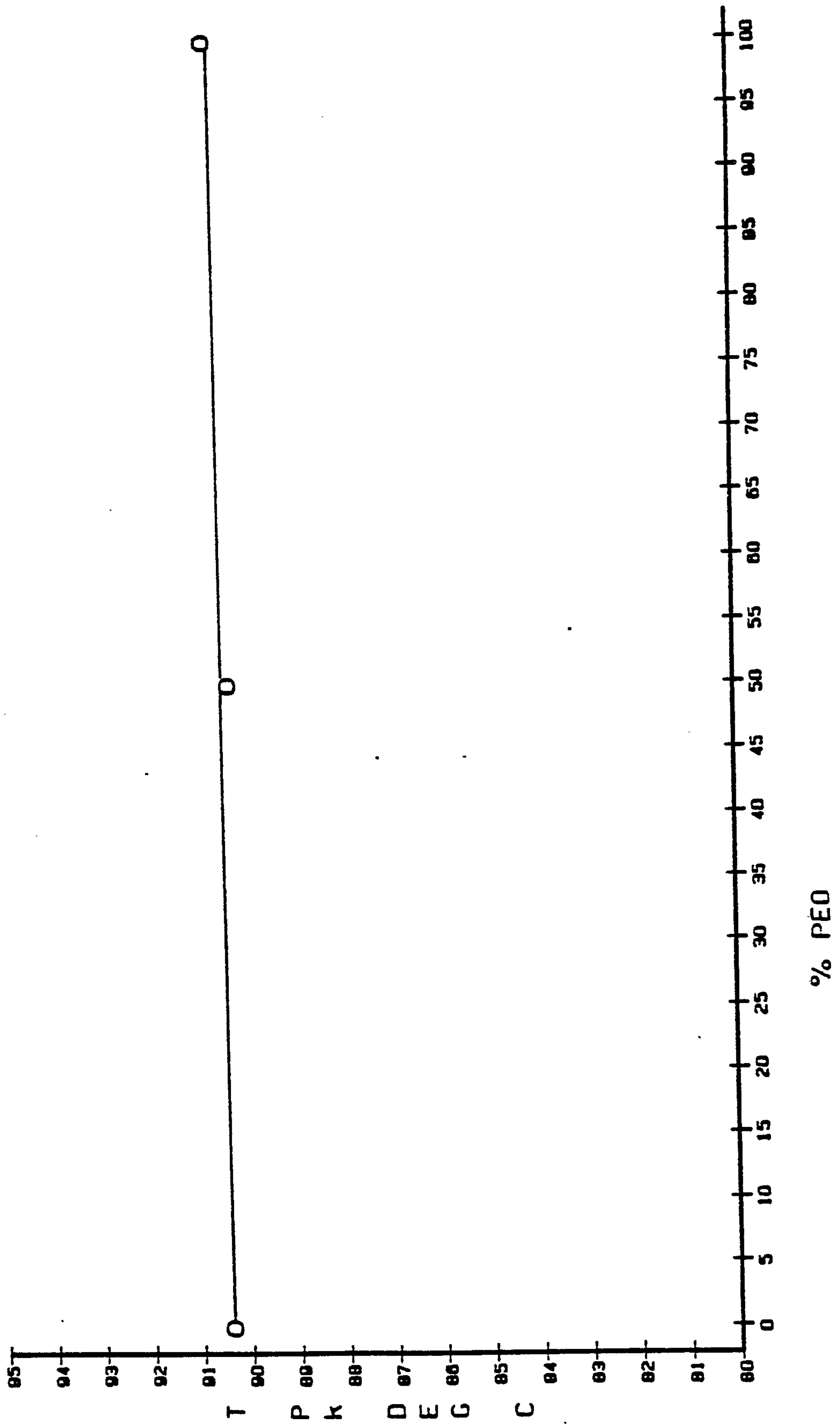
% PEO
0
5
10
15
20
25
30
35
40
45
50
55
60
65
70
75
80
85
90
95
100
T Pk DEG C
80
81
82
83
84
85
86
87
88
89
90
91
92
93
94
95

FIG. 9

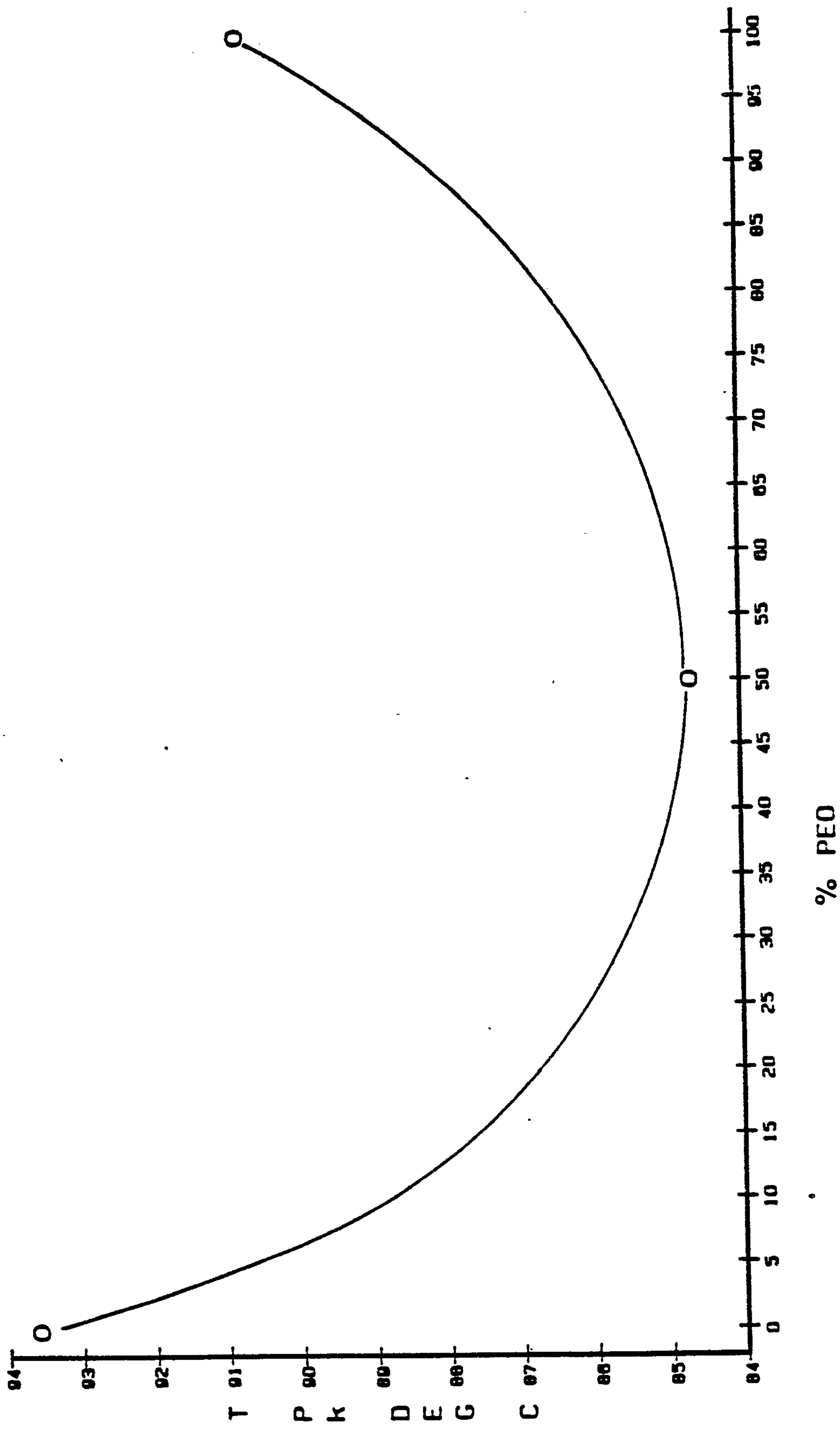
T Pk DEG C
84
85
86
87
88
89
90
91
92
93
94
% PEO
0
5
10
15
20
25
30
35
40
45
50
55
60
65
70
75
80
85
90
95
100

F I G. 10

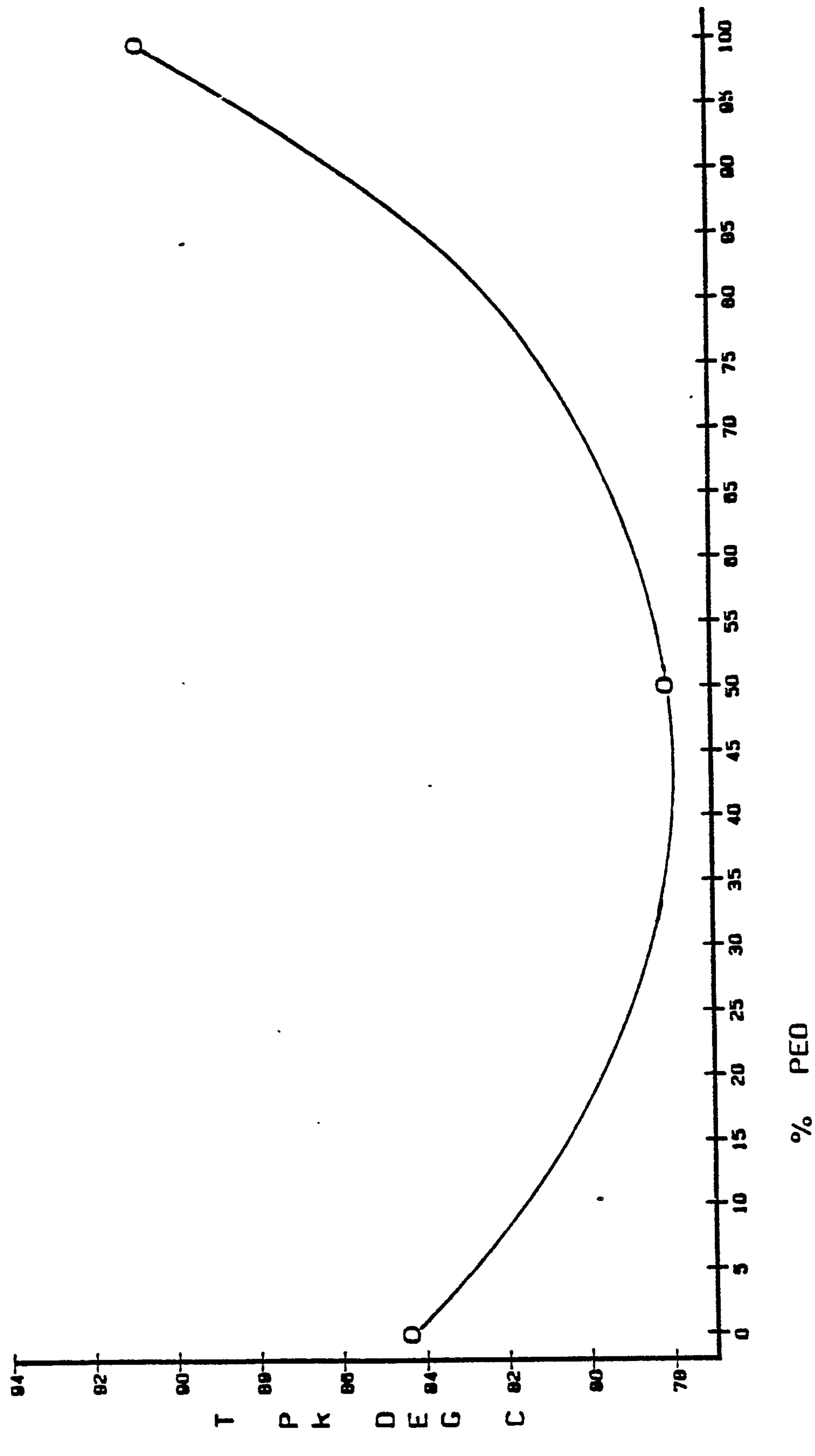
94
92
90
88
86
84
82
80
78
T PK DEG C
0
5
10
15
20
25
30
35
40
45
50
55
60
65
70
75
80
85
90
95
100
% PEO

FIG. 11

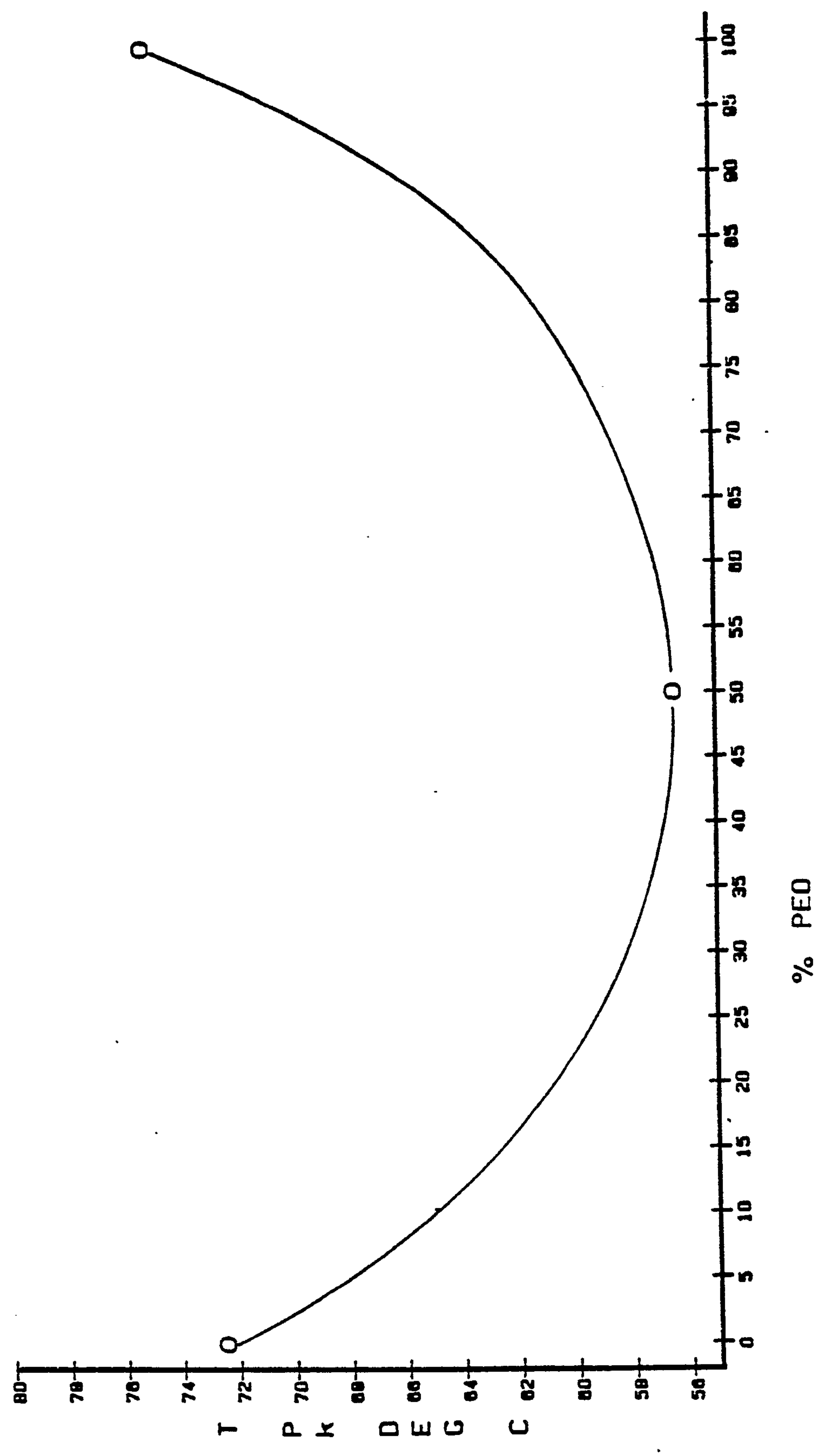

T Pk DEG C
80
78
76
74
72
70
68
66
64
62
60
58
56
% PED
0
5
10
15
20
25
30
35
40
45
50
55
60
65
70
75
80
85
90
95
100